# EUROPÄISCHE PATENTSCHRIFT

(11) **EP 3 268 257 B1**
(45) Veröffentlichungstag und Bekanntmachung des Hinweises auf die Patenterteilung: **25.12.2019**
(21) Anmeldenummer: 16711511.2
(22) Anmeldetag: 10.03.2016
(51) Int. Cl.: B61D 47/00, B61D 3/18, B65G 63/02

(54) **HEBBARE TRAGVORRICHTUNG**
RAISABLE CARRYING DEVICE
DISPOSITIF DE TRANSPORT LEVABLE

(30) Priorität: 11.03.2015 AT 1322015
(43) Veröffentlichungstag der Anmeldung: 17.01.2018
(73) Patentinhaber: Kässbohrer Transport Technik GmbH, 5301 Eugendorf (AT); Blum, Franz, 5020 Salzburg (AT)
(72) Erfinder: BLUM, Franz, 5020 Salzburg (AT); FÖSSL, Horst, 5061 Elsbethen (AT)
(74) Vertreter: Torggler & Hofinger Patentanwälte
(86) Internationale Anmeldenummer: PCT/AT2016/050056
(87) Internationale Veröffentlichungsnummer: WO 2016/141399

(56) Entgegenhaltungen:
- WO-A1-01/72593
- WO-A1-01/98129
- DE-A1- 4 429 710
- DE-A1-102006 012 208
- FR-A1- 2 884 479
- BAIER M ET AL: "CargoBeamer - Markteinführung ist angelaufen / CargoBeamer - new era in freight traffic", ZEVRAIL - GLASERS ANNALEN, GEORG SIEMENS VERLAG, BERLIN, DE, Bd. 135, Nr. 6-7, 1. Juni 2011 (2011-06-01), Seiten 240-245, XP001563525, ISSN: 1618-8330

## Beschreibung

Die vorliegende Erfindung betrifft eine hebbare Tragvorrichtung mit den Merkmalen des Oberbegriffs des Anspruchs 1 und ein Schienenfahrzeug, insbesondere einen Taschenwagen, mit einer solchen Tragvorrichtung.

Die vorliegende Erfindung betrifft weiterhin ein Verfahren zum Beladen eines Schienenfahrzeugs mit den Verfahrensschritten des Anspruchs 19.

Es ist bekannt, Lastfahrzeuge als Ganzes auf sogenannten "Rollenden Landstraßen" zu transportieren. Dieser Vorgang weist den Nachteil auf, dass die Räder der die Lastfahrzeuge transportierenden Schienenfahrzeuge nur einen geringen Durchmesser aufweisen dürfen, weil sich sonst eine zu große Höhe des beladenen Schienenfahrzeuges ergibt. Es ist die gesamte Anordnung aus Zugmaschine und Sattelanhänger zu transportieren. Es kann nur eine Ganzzugverladung erfolgen.

Das Beladen von einzelnen Schienenfahrzeugen mit Ladegut erfolgt meist mit Hubvorrichtungen an Terminals. Da nicht jedes Ladegut selbst hebbar ausgebildet ist, sind bereits Tragvorrichtungen bekannt geworden, die das Heben eines selbst nicht hebbaren Ladeguts mittels einer Hubvorrichtung gestatten.

Eine gattungsgemäße Tragvorrichtung wird unter der Bezeichnung NIKRASA angeboten. Diese Tragvorrichtung weist eine Abstützvorrichtung auf, die in einer Aufnahmeposition der Tragvorrichtung, in welcher das Be- und Entladen erfolgt, in einer stationären Tragekonstruktion gelagert ist. Nach erfolgtem Beladen wird die Abstützvorrichtung durch eine Hubvorrichtung über an der Abstützvorrichtung angeordnete Aufnahmetaschen von der stationären Tragekonstruktion abgehoben. Nachteilig ist daran, dass an jedem Terminal entsprechende stationäre Tragekonstruktionen als Spezialzubehör vorzusehen sind.

Aus dem Dokument Baier M. et al.: "CargoBeamer - Markteinführung ist angelaufen", ZEVrail, 135, Nr. 6-7 (2011) ist ein kranbarer Waggonaufsatz für das Beladen eines Schienenfahrzeuges mit Ladegütern bzw. Sattelaufliegern bekannt.

Aus der FR 2 884 479 A1 ist weiter eine Bühne zur Verladung von Sattelanhängern bekannt, wobei die Bühne eine Befestigungsvorrichtung für den Sattelanhänger aufweist.

Es sind auch spezielle Schienenfahrzeuge bekannt geworden, die ein im Wesentlichen horizontales Beladen des Schienenfahrzeuges ermöglichen. Diese speziellen Schienenfahrzeuge erfordern auch Spezialzubehör in den Terminals.

Aufgabe der Erfindung ist die Bereitstellung einer Tragvorrichtung, welche ohne den Einsatz von Spezialzubehör in den Terminals verwendbar ist und die Bereitstellung eines Schienenfahrzeugs mit einer solchen Tragvorrichtung.

Diese Aufgabe wird durch eine hebbare Tragvorrichtung mit den Merkmalen des Anspruchs 1 und ein Schienenfahrzeug mit einer solchen Tragvorrichtung gelöst. Vorteilhafte Ausführungsformen der Erfindung sind in den abhängigen Ansprüchen definiert.

Mit einer erfindungsgemäßen Tragvorrichtung kann Ladegut, das selbst nicht unmittelbar kranbar sein muss, in vielfältiger Form verladen werden, da die Tragvorrichtung selbst kranbar ist. Beim Ladegut kann es sich beispielsweise um Fahrzeuge (z. B. Sattelanhänger, Zugmaschinen, Traktoren, Busse) oder um nicht fahrfähiges Ladegut (z. B. Container) handeln.

In der vorliegenden Offenbarung wird unter Aufnahmeposition jene Position der wenigstens einen Abstützvorrichtung verstanden, in welcher ein Be- oder Entladen der Tragvorrichtung erfolgt. In der Aufnahmeposition ist die wenigstens eine Abstützvorrichtung im Wesentlichen horizontal ausgerichtet, und nach Beladung mit Ladegut ist dementsprechend auch das Ladegut im Wesentlichen horizontal ausgerichtet. Unter Verladeposition wird jene Position der wenigstens einen Abstützvorrichtung verstanden, in welcher sich das Ladegut nach dem Beenden des Beladevorganges gemeinsam mit der Tragvorrichtung auf dem Schienenfahrzeug befindet.

Dadurch, dass die Tragvorrichtung Aufstandsflächen zum unmittelbaren Aufstellen der Tragvorrichtung auf einem Terminalflur aufweist, ist keine stationäre Tragekonstruktion erforderlich, die als Spezialzubehör in jedem Terminal bereitzustellen wäre.

Besonders bevorzugt ist vorgesehen, dass die Tragvorrichtung, insbesondere wenigstens eine Abstützvorrichtung, im aufgestellten Zustand der Tragvorrichtung auf dem Terminalflur unmittelbar befahrbar ist. Dies kann entweder dadurch ermöglicht sein, dass die wenigstens eine Abstützvorrichtung selbst unmittelbar auf dem Terminalflur aufliegt, oder dass die Tragvorrichtung eine integrierte Fahrrampe aufweist.

Dass die Tragvorrichtung bzw. die wenigstens eine Abstützvorrichtung im aufgestellten Zustand der Tragvorrichtung auf dem Terminalflur unmittelbar befahrbar ist, kann durch verschiedene Merkmale isoliert voneinander oder in Kombination erzielt werden. Einerseits kann das Eigengewicht der Tragvorrichtung in Verbindung mit einem gering genug gewählten Neigungswinkel eines Auffahrelements der Abstützvorrichtung ausreichend sein. Der Neigungswinkel kann vorzugsweise weniger als 20 Grad zur Horizontalen betragen.

Alternativ oder zusätzlich können reibungsvergrößernde Maßnahmen ergriffen werden, insbesondere im Falle eines glatten Terminalflurs.

Vorzugsweise können die Aufstandsflächen mit reibungsvergrößernden Auflagevorrichtungen ausgestattet sein. Dadurch ist auch bei einem glatten Terminalflur sichergestellt, dass die Tragvorrichtung befahren werden kann, ohne sich dabei relativ zum Terminalflur zu verschieben.

Besonders bevorzugt ist vorgesehen, dass die Tragvorrichtung einen Tragrahmen aufweist, wobei die Aufnahmetaschen und die Aufstandsflächen am Tragrahmen angeordnet sind.

Die Aufnahmetaschen sind bevorzugt für Greifkanten eines sogenannten "spreaders" ausgebildet, welcher an einem Kran oder einem sogenannten "reach stacker" angebracht sein kann.

Es kann vorgesehen sein, dass der Tragrahmen zumindest an einer seiner Seiten öffenbar ist. Üblicherweise wird der Tragrahmen längserstreckt ausgebildet sein und zwei Längsseiten umfassen. Darüber hinaus kann der Tragrahmen auch eine oder zwei Stirnseiten umfassen. In diesem Fall kann wenigstens eine der beiden Längsseiten und/oder wenigstens eine der beiden Stirnseiten offenbar sein (z. B. dadurch, dass die Rahmenteile der entsprechenden Seite verschwenkbar oder entfernbar ausgebildet sind). Die Öffenbarkeit einer Stirnseite gestattet das Befahren der Abstützvorrichtung (bzw. in dem Fall, dass beide Stirnseiten offenbar ausgebildet sind, sogar das Durchfahren der Tragvorrichtung). Die Öffenbarkeit einer oder beider Längsseiten erleichtert das Beladen der Abstützvorrichtung mit Ladegut.

Wie eingangs bereits ausgeführt, kann die Tragvorrichtung von einer an einem Terminal vorhandenen Hubvorrichtung angehoben und auf ein Schienenfahrzeug verladen werden. Bei der Hubvorrichtung handelt es sich in der Regel um einen Verladekran, der auf die Höhe der Tragvorrichtung bzw. der daran angeordneten Aufnahmetaschen abgesenkt wird und der mit Greifern in an der Tragvorrichtung ausgebildeten Aufnahmetaschen bzw. Ösen eingreift, um die Tragvorrichtung anzuheben.

Vorzugsweise kann daher vorgesehen sein, dass die Aufnahmetaschen in einer Aufnahmeposition der wenigstens einen Abstützvorrichtung, in der die wenigstens eine Abstützvorrichtung im Wesentlichen horizontal ausgerichtet ist, vertikal beabstandet zur wenigstens einen Abstützvorrichtung oberhalb der wenigstens einen Abstützvorrichtung angeordnet sind. Besonders bevorzugt sind die Aufnahmetaschen in einem oberen Endbereich des Tragrahmens angeordnet. Durch die Anordnung der Aufnahmetaschen in einem oberen Endbereich des Tragrahmens und damit vertikal beabstandet zur Abstützvorrichtung bzw. Tragfläche der Tragvorrichtung ist es insbesondere möglich, die Tragvorrichtung in eine Tasche eines als Taschenwagen (*engl. "pocket wagon", franz. "wagon kangourou"*) ausgebildeten Schienenfahrzeugs einzubringen, indem die Tragvorrichtung von der Hubvorrichtung von oben in die Tasche des Taschenwagens abgesenkt werden kann. In der abgesenkten Stellung befindet sich die Abstützvorrichtung zumindest teilweise unterhalb einer Oberkante der Tasche des Taschenwagens. Auch der Tragrahmen befindet sich in der abgesenkten Stellung der Tragvorrichtung größtenteils unterhalb der Oberkante. Die Aufnahmetaschen befinden sich jedoch oberhalb der Oberkante.

Zum Anheben der Tragvorrichtung mittels Hubvorrichtung sind vorzugsweise je Längsseite des Tragrahmens wenigstens zwei Aufnahmetaschen vorgesehen, die ein Paar an Aufnahmetaschen bilden. Der Abstand der zwei Aufnahmetaschen des Paares zueinander kann gemäß dem Normentwurf prEN 70015:2013 mit dem Datum 2013-08 gewählt sein und dementsprechend etwa 4876 mm +/- 100 mm betragen. Vorzugsweise können mehrere Paare von Aufnahmetaschen je Längsseite vorgesehen sein, die entlang der Längsseite versetzt zueinander angeordnet sind, um unterschiedliche Schwerpunktslagen der beladenen Tragvorrichtung zu berücksichtigen.

Der Tragrahmen umfasst vorzugsweise zwei längserstreckte Längsseiten, die so weit voneinander beabstandet sind, dass die Tragvorrichtung problemlos mit Fahrzeugen (z. B. Sattelanhänger, Zugmaschinen, Traktoren, Busse) oder mit nicht fahrfähigem Ladegut (z. B. Container) beladen werden kann. Vorzugsweise beträgt die durchgängige (entlang der Längserstreckung) lichte Weite zwischen den zwei Längsseiten des Tragrahmens wenigstens etwa 2600 mm.

Es kann vorzugsweise vorgesehen sein, dass die Aufnahmetaschen in einem oberen Endbereich der Längsseiten angeordnet sind. Darüber hinaus kann vorgesehen sein, dass die Aufnahmetaschen in den Bereichen der jeweiligen Längsenden der Längsseiten angeordnet sind.

Die Tragfähigkeit der vorgeschlagenen hebbaren Tragvorrichtung beträgt vorzugsweise zumindest etwa 7,5 metrische Tonnen (t) je Abstützvorrichtung, sowohl im abgesetzten als auch im angehobenen Zustand, in welchem die Tragvorrichtung mittels Verladekran angehoben ist. Die Tragfähigkeit des Tragrahmens kann mindestens etwa 15 t betragen und bevorzugt bis zu etwa 36 t betragen.

Die Längsseiten können auf der Außenseite jeweils ein zumindest teilweise entlang ihrer Länge verlaufendes Versteifungselement (z.B. Obergurt) aufweisen. Das Versteifungselement kann vorzugsweise entlang der gesamten Länge der Längsseite verlaufen. Es kann auch je nach Ausbildung des Taschenwagens bevorzugt im Bereich der Mitte eine Kröpfung aufweisen, um der Kontur des Taschenwagens zu folgen.

Die Versteifungselemente verhindern ein Durchbiegen oder Ausknicken der Tragvorrichtung während des Hebevorganges im bevorzugten Fall, dass die Wandstärke so gering wie möglich gehalten wird, um den Innenraum bestmöglich auszunutzen. Die Anordnung des Versteifungselements an der Außenseite der Längsseiten vermeidet eine Beeinträchtigung der im Innenraum zur Verfügung stehenden Breite, die bei der Erfindung bis zu 2600 mm beträgt, in der gesamten Länge der Längsseiten.

Die Aufnahmetaschen sind vorzugsweise oberhalb der Versteifungselemente angeordnet.

Die Tragvorrichtung kann bis zur Höhe der Versteifungselemente in die Tasche des Taschenwagens versenkt werden.

Es kann vorgesehen sein, dass die wenigstens eine Abstützvorrichtung in Form einer Tragfläche oder in Form einer Vielzahl von Streben ausgebildet ist. Eine Tragfläche kann zum Beispiel flach sein oder mit wannenförmigen Vertiefungen versehen sein, die so ausgeformt sind, dass sie Räder von als Fahrzeugen ausgebildetem Ladegut teilweise aufnehmen können.

Es ist vorgesehen, dass die wenigstens eine Abstützvorrichtung zwischen einer Aufnahmeposition für das Ladegut, bei der das Ladegut im Wesentlichen horizontal ausgerichtet ist und einer Verladeposition für das Ladegut, in welcher das Ladegut geneigt ist, bewegbar ist. Diese Ausführungsform ist besonders - aber nicht nur - für das Beladen von als Taschenwagen ausgebildeten Schienenfahrzeugen geeignet.

Diese Ausgestaltung ist mit einer ganzen Reihe von Vorteilen verbunden. Dadurch, dass das Ladegut in der Verladeposition geneigt angeordnet ist, ist das Ladegut in der Verladeposition tiefer positioniert, als dies bei einer horizontalen Ausrichtung in der Verladeposition der Fall wäre, da die Abstützvorrichtung wenigstens teilweise in die Tasche des Taschenwagens bewegbar ist. Durch die Neigung bzw. Schrägstellung ergibt sich außerdem eine verdichtete Lademöglichkeit durch eine verbesserte Ausnutzung des Laderaums zwischen den Hauptträgern des Schienenfahrzeuges.

Es kann vorgesehen sein, dass die wenigstens eine Abstützvorrichtung relativ zur Tragvorrichtung feststehend angeordnet ist, vorzugsweise einstückig mit der Tragvorrichtung ausgebildet ist. Die Abstützvorrichtung kann ein Auffahrelement umfassen, das schwenkbar an der Abstützvorrichtung angeordnet sein kann.

Es kann vorgesehen sein, dass die Tragvorrichtung als Ganzes zwischen der Aufnahmeposition und der Verladeposition bewegbar ist. Die Tragvorrichtung bzw. zumindest die wenigstens eine Abstützvorrichtung kann z. B. als schiefe Ebene oder in Form treppenartig angeordneter Streben ausgebildet sein. In diesem Fall ist es vorteilhaft, wenn die Tragvorrichtung in der Aufnahmeposition durch wenigstens eine entfernbare, einziehbare oder einschwenkbare Stütze so abstützbar ist, dass ein problemloses Befahren der Abstützvorrichtung möglich ist. Die Tragvorrichtung wird durch die Hubvorrichtung so am Taschenwagen abgesetzt, dass die wenigstens eine Abstützvorrichtung teilweise in der Tasche angeordnet ist und sich bevorzugt ohne Verwendung der Stütze unmittelbar am Taschenwagen (z. B. mit dem erhöhten Ende der schiefen Ebene oder der höchsten Strebe der Treppe) abstützen kann.

Es kann vorgesehen sein, dass die wenigstens eine Abstützvorrichtung zur Ausführung der Bewegung zwischen der Aufnahmeposition und der Verladeposition relativ zur Tragvorrichtung bewegbar, vorzugsweise schwenkbar, angeordnet ist. Dies gestattet es auf eine Weise, zwischen der Aufnahmeposition und der Verladeposition zu wechseln. Die wenigstens eine Abstützvorrichtung kann zum Beispiel in Form einer ebenen Tragfläche ausgebildet sein, die an einem Ende schwenkbar gelagert ist. Die Schwenkachse verläuft in der Verladeposition in Querrichtung des Schienenfahrzeuges.

Vorzugsweise kann bei einer Tragvorrichtung mit einem längserstreckten Tragrahmen vorgesehen sein, dass ein Ende der wenigstens einen Abstützvorrichtung über die Längserstreckung des Tragrahmens hinausragt. Dies hat den Vorteil, dass bei einem Absenken der Tragvorrichtung auf das Schienenfahrzeug, insbesondere bei einem Absenken in eine Tasche eines Taschenwagens, das Ende der Abstützvorrichtung auf einem Rand bzw. einer Oberkante der Tasche aufliegt und sich dadurch die Abstützvorrichtung bei einem weiteren Absenken der Tragvorrichtung in die Tasche automatisch durch das Absenken verschwenkt, bis die Verladeposition der Abstützvorrichtung erreicht ist.

Es können eine Mehrzahl von Schwenklagerstellen für die wenigstens eine Abstützvorrichtung vorgesehen sein, sodass die wenigstens eine Abstützvorrichtung in verschiedenen Höhenpositionen und/oder verschiedenen Längspositionen an der Tragvorrichtung angeordnet werden kann. Die verschiedenen Höhenpositionen bieten die Möglichkeit, die Position der wenigstens einen Abstützvorrichtung an die Höhe des Ladeguts anzupassen. Die verschiedenen Längspositionen bieten die Möglichkeit, unterschiedlich lange Ladegüter abzustützen. Insbesondere kann die wenigstens eine Abstützvorrichtung so angeordnet sein, dass es beim Aufsetzen der Tragvorrichtung auf das Schienenfahrzeug zu keiner Berührung des freien Endes der Abstützvorrichtung mit dem Schienenfahrzeug kommt, die ein Verschwenken der Abstützvorrichtung hervorrufen würde.

Die Verankerung der Abstützvorrichtung in den Schwenklagerstellen kann mittels einer an sich bekannten Bolzenverriegelung erfolgen, bei der aus der Abstützvorrichtung Bolzen ausfahren und in die Schwenklagerstellen eingreifen.

Vorzugsweise sind die Tragvorrichtungen stapelbar ausgebildet. Dabei können Öffnungen am Tragrahmen vorgesehen sein, durch die in übereinander gestapelten Tragvorrichtungen Fixierelemente eingebracht werden können, um die gestapelten Tragvorrichtungen relativ zueinander zu fixieren.

Es kann vorgesehen sein, dass eine Antriebsvorrichtung zum Bewegen der wenigstens einen Abstützvorrichtung vorgesehen ist. Die Antriebsvorrichtung kann zum Beispiel pneumatisch oder hydraulisch, z. B. in Form einer oder mehrerer Kolben-Zylinder-Einheit(en) oder elektrisch ausgebildet sein.

Es kann alternativ vorgesehen sein, dass die wenigstens eine Abstützvorrichtung zur Ausführung der Bewegung zwischen der Aufnahmeposition und der Verladeposition relativ zur Tragvorrichtung - ggf. bis auf die Einwirkung einer Dämpfvorrichtung - frei bewegbar ist. Durch Absenken der Tragvorrichtung mittels der Hebevorrichtung kommt es nach Kontaktierung des freien (der Schwenkachse gegenüberliegenden) Endes der Abstützvorrichtung oder deren Tragfläche mit dem Schienenfahrzeug (z. B. mit dem Rand oder der Oberkante der Tasche eines Taschenwagens) zu einem Anheben des freien Endes und damit zu einem Verschwenken der Abstützvorrichtung oder deren Tragfläche um die Schwenkachse.

Es kann vorgesehen sein, dass die Tragvorrichtung - vorzugsweise formschlüssige - Fixiermittel zum Fixieren der Tragvorrichtung am Schienenfahrzeug aufweist. Dabei kann vorgesehen sein, dass die Fixiermittel am Tragrahmen, vorzugsweise an einer Stirnseite des Tragrahmens, angeordnet sind. Besonders bevorzugt sind wenigstens zwei voneinander beabstandete Fixiermittel am Tragrahmen angeordnet. Die Fixiermittel sind vorzugsweise als ISO-Containeraufnahmen ausgebildet. Dies ist deshalb besonders vorteilhaft, weil Schienenfahrzeuge wie der Taschenwagen standardmäßig mit komplementären Zapfen, die in ISO-Containeraufnahmen positionierbar sind, versehen sind. Ist das Ladegut in Form eines Sattelanhängers ausgebildet, ist es vorteilhaft, wenn der Sattelzapfen des Sattelanhängers - wie bekannt - in eine am Schienenfahrzeug angeordnete Ausnehmung einführbar ist. Zu diesem Zweck ist es vorteilhaft, wenn die Fixiermittel relativ zur Tragvorrichtung verstellbar angeordnet sind, um eine geometrische Überbestimmung zu vermeiden.

Es kann vorgesehen sein, dass die wenigstens eine Abstützvorrichtung längenveränderbar ausgebildet ist. Hierdurch ergibt sich eine verbesserte Lademöglichkeit für größeres Ladegut.

An der wenigstens einen Abstützvorrichtung kann wenigstens eine Auflagefläche vorgesehen sein, welche vorzugsweise im Wesentlichen konvex ausgebildet ist, um ein Abwälzen der wenigstens einen Abstützvorrichtung am Schienenfahrzeug oder Taschenwagen bei der Absenkung der Tragvorrichtung in die Tasche des Taschenwagens zu gestatten. Die wenigstens eine Auflagefläche kann eine Aufnahmeöffnung (z.B. in Form eines in Längsrichtung verlaufenden Führungsschlitzes) aufweisen, in den ein am Taschenwagen angeordneter Zapfen einführbar ist. In diesem Fall weist die ggf. konvexe Auflagefläche eine Rutschsicherung zur Begrenzung eines Rutschens der Tragvorrichtung relativ zum Schienenfahrzeug in einer Richtung quer zur Längsrichtung auf. Zur Begrenzung eines Rutschens in Längsrichtung kann wenigstens ein Anschlag - bevorzugt können zwei in Längsrichtung der Aufnahmeöffnung beabstandet angeordnete Anschläge - vorgesehen sein, an den sich im verladenen Zustand der Tragvorrichtung ein am Taschenwagen angeordneter Zapfen abstützen kann. Die Rutschsicherung kann unabhängig von der Aufnahmeöffnung an anderer Stelle erfolgen.

Es kann vorgesehen sein, dass die wenigstens eine Abstützvorrichtung unterschiedlich relativ zum Tragrahmen positioniert an diesem - ggf. bewegbar - befestigbar ist. Damit kann äußerst flexibel auf unterschiedliche Höhen des Ladeguts reagiert werden.

Es kann vorgesehen sein, dass der Tragrahmen längserstreckt ausgebildet ist und an wenigstens einer seiner Längsseiten eine Ausnehmung in der Höhe aufweist, die das Öffnen einer Türe eines an der wenigstens einen Abstützvorrichtung angeordneten Fahrzeuges gestattet.

Es kann vorgesehen sein, dass die Tragvorrichtung wenigstens zwei Abstützvorrichtungen aufweist, die unabhängig voneinander mit Ladegut beladbar sind. Dies ermöglicht die beinahe vollständige Ausnutzung des am Schienenfahrzeug zur Verfügung stehenden Laderaumes mit einer einzigen Tragvorrichtung, auf welcher z. B. zwei Zugmaschinen (jeweils in einer der wenigstens zwei Abstützvorrichtungen) gelagert werden können.

Die Tragvorrichtung kann fahrbar ausgebildet sein.

Schutz wird auch begehrt für ein Schienenfahrzeug, insbesondere Taschenwagen, mit wenigstens einer vorgeschlagenen Tragvorrichtung gemäß Anspruch 28 sowie für einen Taschenwagen mit einer Tasche und wenigstens einer vorgeschlagenen Tragvorrichtung gemäß Anspruch 29.

Weitere Vorteile und Einzelheiten der Erfindung werden anhand der Figuren und der dazu gehörigen Figurenbeschreibung diskutiert. Es zeigen:
- Fig. 1a - 1d: ein erstes Ausführungsbeispiel der Erfindung in verschiedenen Ansichten in der Aufnahmeposition (ohne Ladegut),
- Fig. 2a - 2d: ein zweites Ausführungsbeispiel der Erfindung in verschiedenen Ansichten in der Aufnahmeposition (ohne Ladegut)
- Fig. 3a - 3d: das Ausführungsbeispiel der Fig. 2 in der Verladeposition (ohne Ladegut),
- Fig. 4a - 4d: das Ausführungsbeispiel der Fig. 2 in einer andersartigen Konfiguration in der Verladeposition (ohne Ladegut),
- Fig. 5a - 5d: das Ausführungsbeispiel der Figur 2 in verschiedenen Ansichten in der Aufnahmeposition (mit Ladegut),
- Fig. 6a - 6d: das Ausführungsbeispiel der Figur 2 in verschiedenen Ansichten in der Verladeposition (mit Ladegut),
- Fig. 7a - 7d: das Ausführungsbeispiel der Figur 1 in verschiedenen Ansichten in der Verladeposition (mit Ladegut),
- Fig. 8a - 8c: eine weitere Darstellung des Ausführungsbeispiel der Figur 2 in einer andersartigen Konfiguration in der Verladeposition (mit Ladegut),
- Fig. 9a - 9d: ein drittes Ausführungsbeispiel der Erfindung in verschiedenen Ansichten in der Aufnahmeposition (ohne Ladegut),
- Fig. 10a - 10d: ein weiteres Ausführungsbeispiel der Erfindung,
- Fig. 11a und 11b: ein weiteres Ausführungsbeispiel der Erfindung in perspektivischen Ansichten,
- Fig. 12: eine Detaildarstellung der Fig. 11b,
- Fig. 13a - 13c: eine Abfolge des Aufsetzens der Abstützvorrichtung der Fig. 12 an einem Taschenwagen in Seitenansicht,
- Fig. 14: einen Abschnitt der Abstützvorrichtung der Fig. 12 in einer Seitenansicht und
- Fig. 15a und 15b: Ansichten des Ausführungsbeispiels der Fig. 11 in einem Taschenwagen.

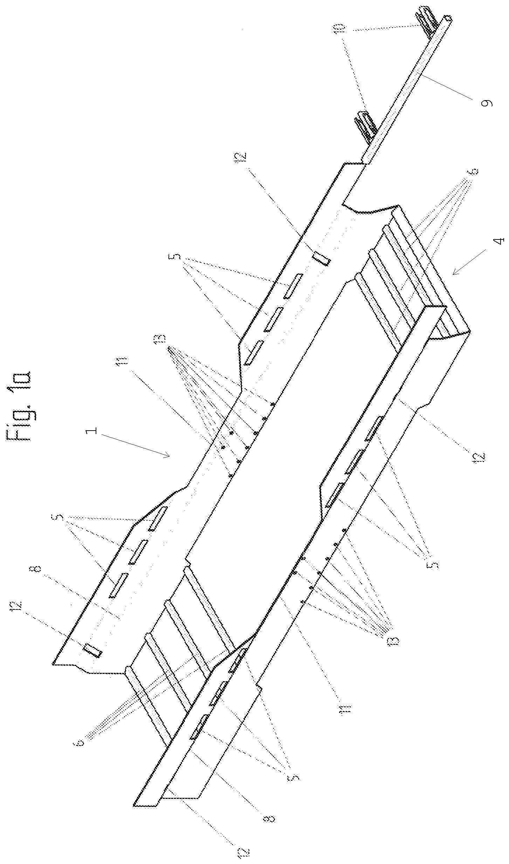

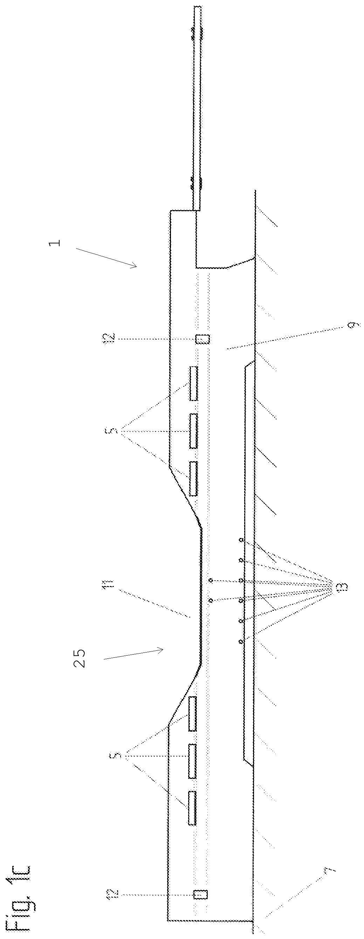

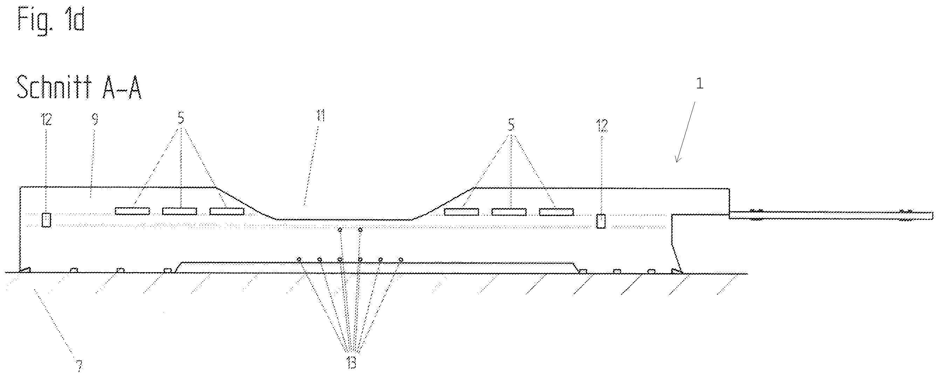

Fig. 1a - 1d zeigt ein erstes Ausführungsbeispiel einer vorgeschlagenen hebbaren Tragvorrichtung 1 in verschiedenen Ansichten in der Aufnahmeposition (ohne Ladegut 3). Fig. 1a zeigt eine perspektivische Ansicht von oben. Die Abstützvorrichtung 4 ist in diesem Fall in Form einer Vielzahl von Streben ausgebildet, die jeweils im Bereich einer Stirnseite des hier längenerstreckt ausgebildeten Tragrahmens 8 angeordnet sind. Die Abstützvorrichtung 4 ist feststehend relativ zur Tragvorrichtung 1 angeordnet. Die hier gezeigte Tragvorrichtung 1 liegt sowohl mit den Seitenteilen des Tragrahmens 8 als auch mit den Streben als Aufstandsflächen 6 auf einem hier nicht dargestellten Terminalflur 7 (siehe Fig. 1c und 1d) auf. Die Tragvorrichtung 1 weist in diesem Ausführungsbeispiel eine abschnittsweise schwenkbar ausgebildete Seite 9 des Tragrahmens 8 auf. Anders als dargestellt, könnte auch die andere Stirnseite als schwenkbar ausgebildete Seite 9 des Tragrahmens 8 ausgeführt sein.

Die Tragvorrichtung 1 ist in diesem Ausführungsbeispiel durchfahrbar ausgebildet. Sie eignet sich besonders für die Beladung mit einem als Sattelanhänger ausgebildeten Ladegut 3. Die Beladung erfolgt derart, dass die Zugmaschine samt angehängtem Sattelanhänger die Tragvorrichtung 1 durchfährt, bis der Sattelanhänger vollständig in der Tragvorrichtung 1 auf deren Abstützvorrichtung 4 angeordnet ist. Natürlich ist es auch möglich, den Sattelanhänger mittels der Zugmaschine rückwärts in die Tragvorrichtung 1 einzubringen. In diesem Fall muss die Tragvorrichtung 1 nicht durchfahrbar ausgebildet sein. Nach erfolgter Positionierung des Sattelanhängers wird die Zugmaschine entkoppelt und gegebenenfalls gesondert auf einer weiteren erfindungsgemäßen Tragvorrichtung 1 parkiert.

Eine Hubvorrichtung kann über die Aufnahmetaschen 5 die Tragvorrichtung 1 samt Ladegut 3 als Ganzes anheben und auf einem hier nicht dargestellten Schienenfahrzeug 2 absetzen. Vorzugsweise entspricht die Dimensionierung der Tragvorrichtung 1 der Dimensionierung des Ladebereichs des Schienenfahrzeugs 2. Für die vier Greifarme der Hubvorrichtung sind hier an vier verschiedenen Positionen der Tragvorrichtung 1 jeweils drei Aufnahmetaschen 5 vorgesehen, von denen jeweils eine je nach Schwerpunkt des Ladeguts 3 verwendet wird.

Für Leerfahrten ohne Ladegut 3 auf den Tragvorrichtungen 1 können die Tragvorrichtungen 1 übereinander gestapelt werden. Um die gestapelten Tragvorrichtungen 1 fixieren zu können, weist ein jeweiliger Tragrahmen 8 einer Tragvorrichtung 1 Öffnungen 12 auf, durch die ein Fixierelement eingebracht werden kann. Durch eine gestapelte Anordnung mehrerer Tragvorrichtungen 1 können Schienenfahrzeuge 2 für Leertransporte eingespart werden.

Der Tragrahmen 8 weist an seinen Längsseiten jeweils eine Ausnehmung 11 auf, die das Öffnen einer Türe eines an der Abstützvorrichtung 4 angeordneten Fahrzeugs gestattet.

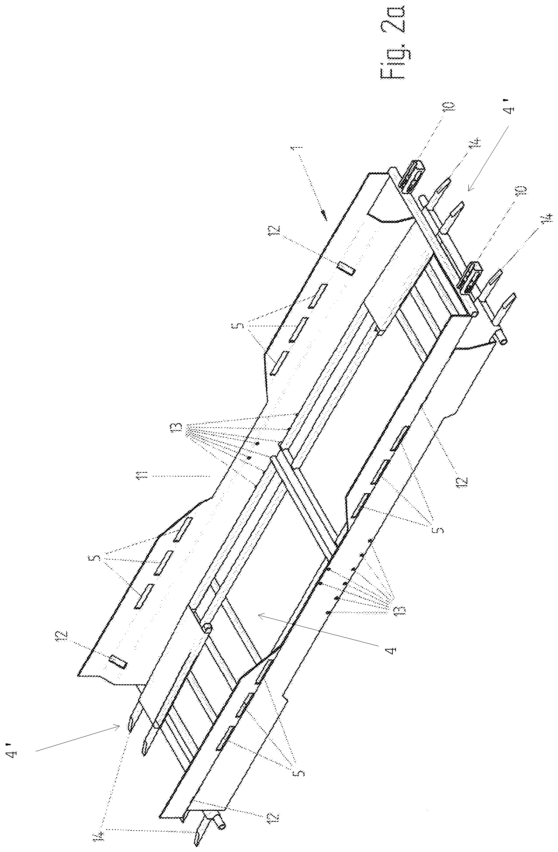

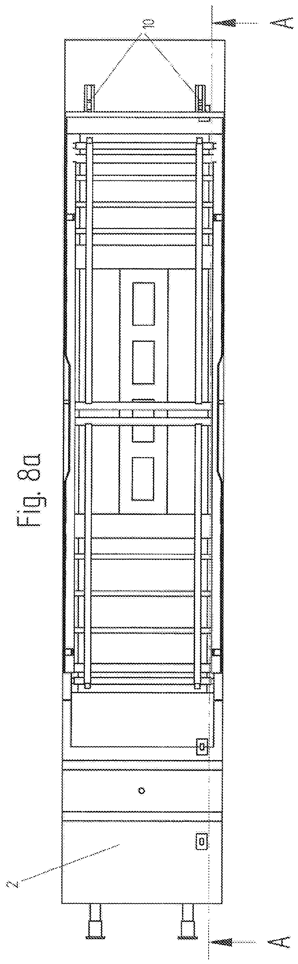

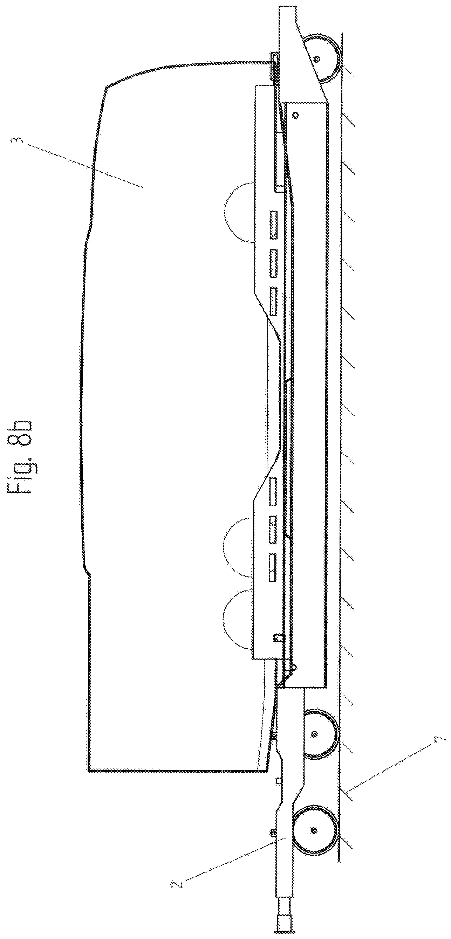

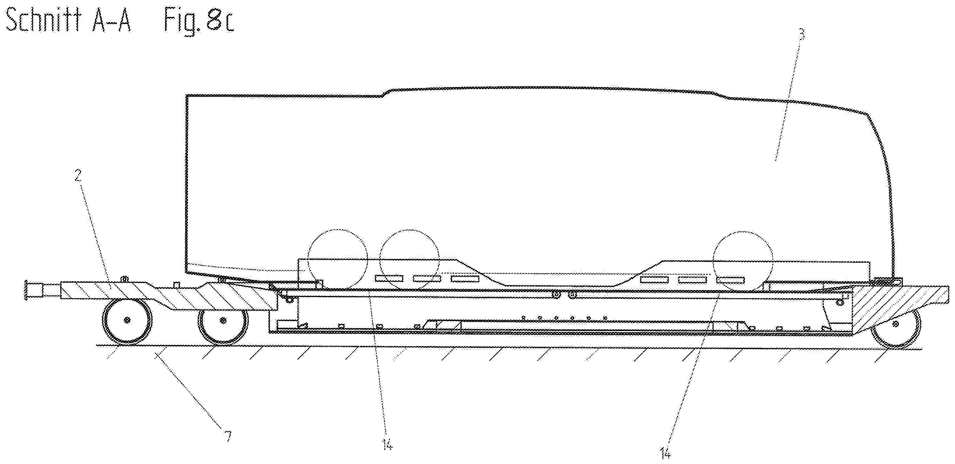

Fig. 2a - 2d zeigt ein zweites Ausführungsbeispiel der Erfindung in verschiedenen Ansichten in der Aufnahmeposition (ohne Ladegut 3). Zusätzlich zum ersten Ausführungsbeispiel sind in diesem Beispiel im Bereich der jeweiligen Stirnseiten der Tragvorrichtung 1 jeweils als Tragflächen in Form von Planken 14 ausgebildete Abstützvorrichtungen 4' angeordnet. Die Abstützvorrichtungen 4' bzw. deren Planken 14 sind um jeweils eine Schwenkachse schwenkbar an der Tragvorrichtung 1 angeordnet. Die Schwenkachsen verlaufen durch im Mittelbereich der Tragvorrichtung 1 angeordnete Schwenklagerstellen bzw. Lager 13, wobei erkennbar ist, dass eine Vielzahl von Lagern 13 zur Verfügung steht, um unterschiedliche Positionen der Planken 14 zu ermöglichen (vgl. Fig. 8).Durch die Mehrzahl von Schwenklagerstellen bzw. Lagern 13 können die Abstützvorrichtungen 4' an verschiedenen Höhenpositionen und/oder an verschiedenen Längspositionen der Tragvorrichtung 1 angeordnet werden. Anders als dargestellt, kann eine jeweilige Tragfläche auch vollflächig ausgebildet sein.

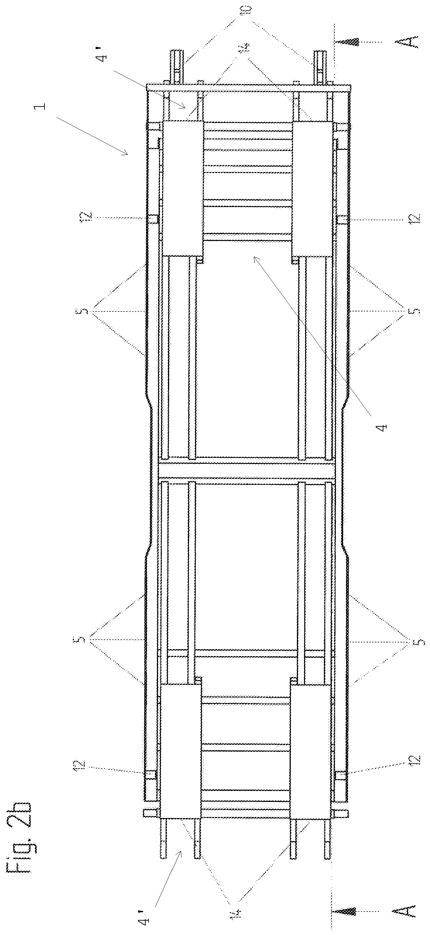

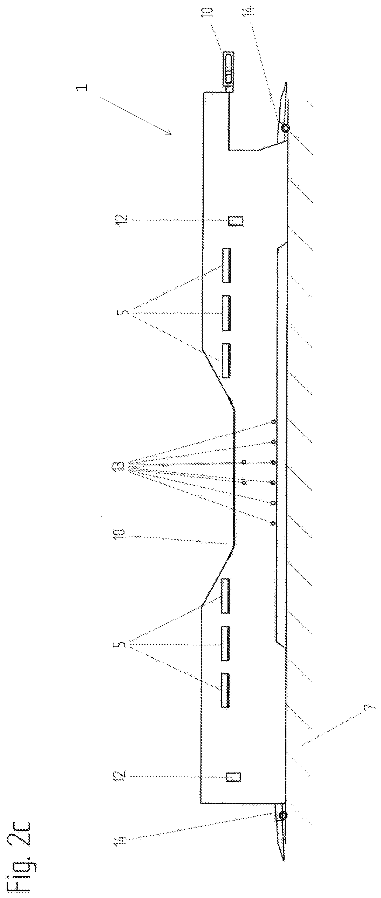

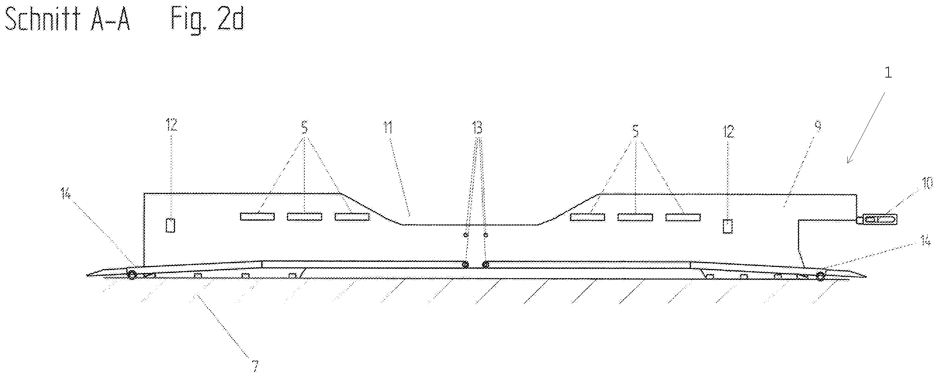

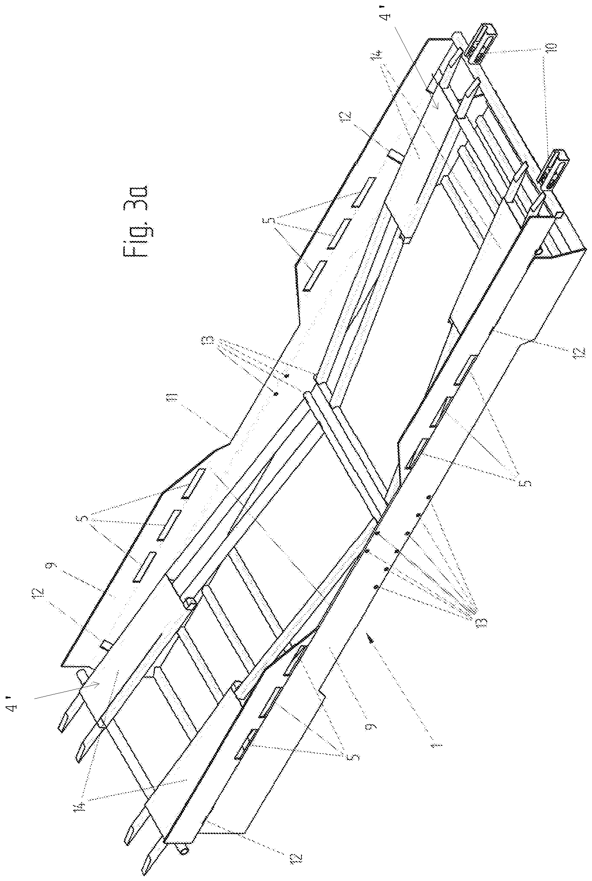

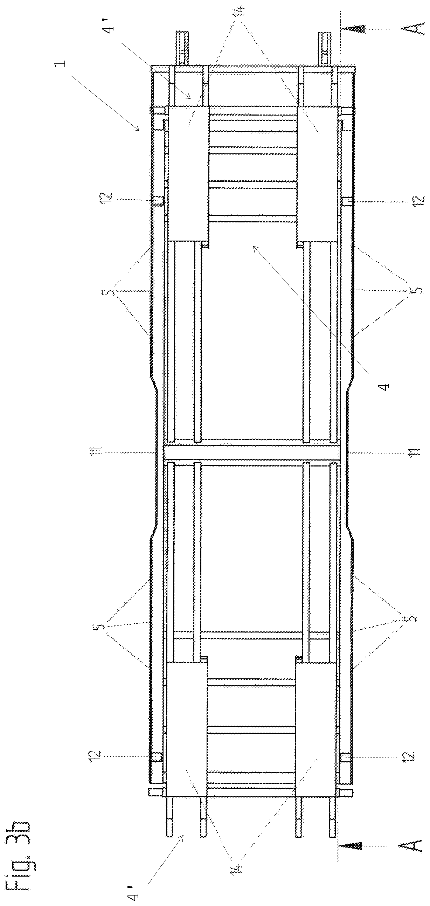

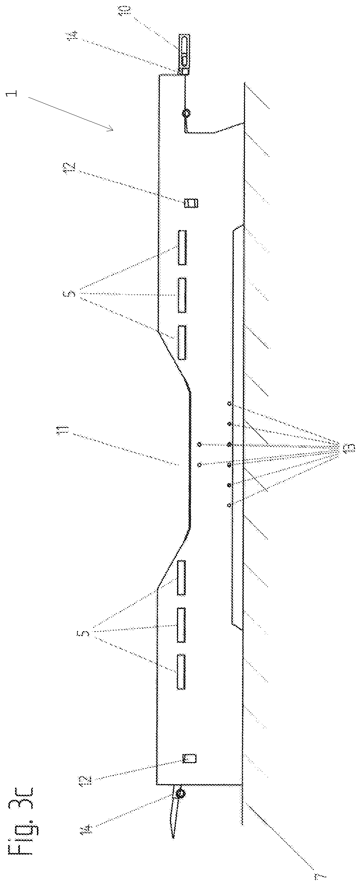

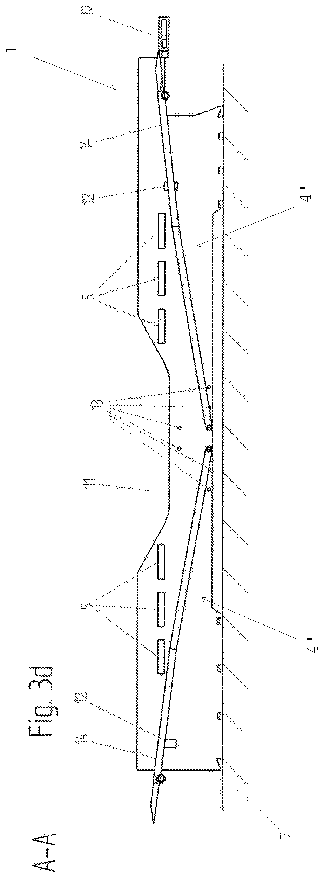

Fig. 3a - 3d zeigt das Ausführungsbeispiel der Fig. 2 in der Verladeposition (ohne Ladegut 3). Die schwenkbaren Abstützvorrichtungen 4' in Form der Planken 14 sind jeweils frei zwischen einer Aufnahmeposition für das Ladegut 3, bei der das Ladegut 3 im Wesentlichen horizontal ausgerichtet ist und einer Verladeposition des Ladeguts 3, in welcher das Ladegut 3 geneigt ist, bewegbar. In der gezeigten Darstellung befindet sich die Transportvorrichtung 1 bereits in einem hier nicht dargestellten Schienenfahrzeug 2 in Form eines Taschenwagens. Durch den Taschenwagen werden die Tragflächen bzw. Planken 14 im Bereich der Stirnseiten des Tragrahmens 8 angehoben und somit schräg gestellt.

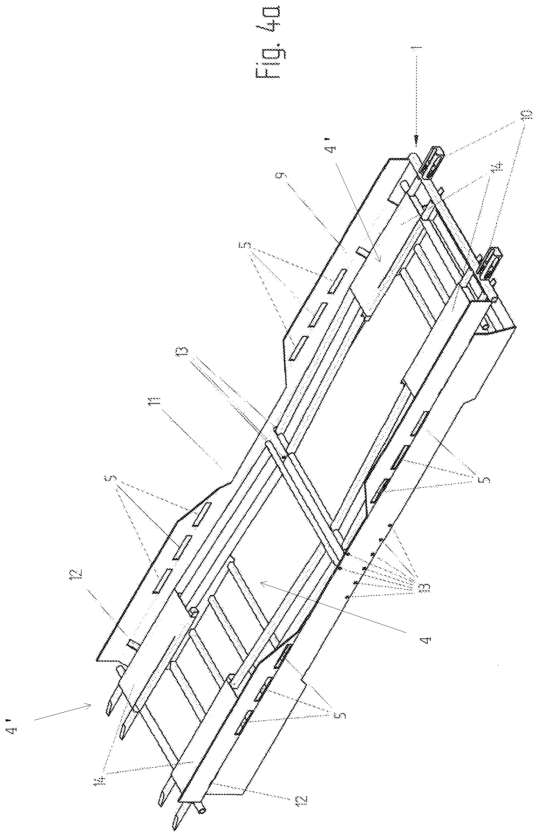

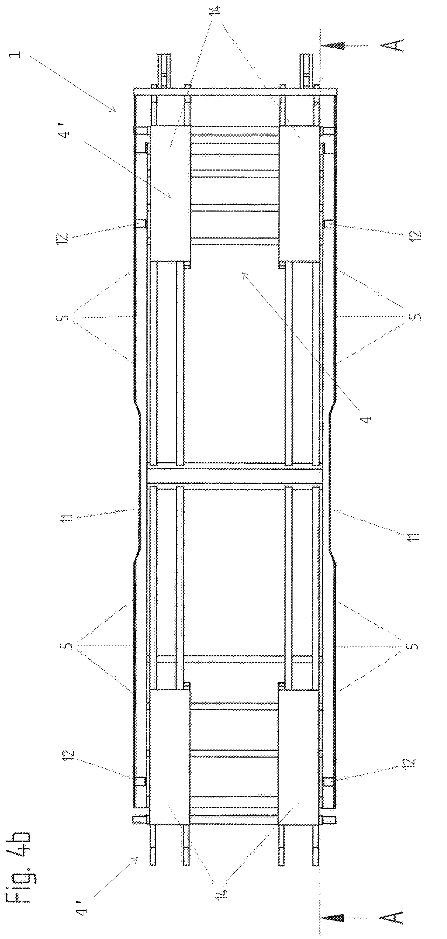

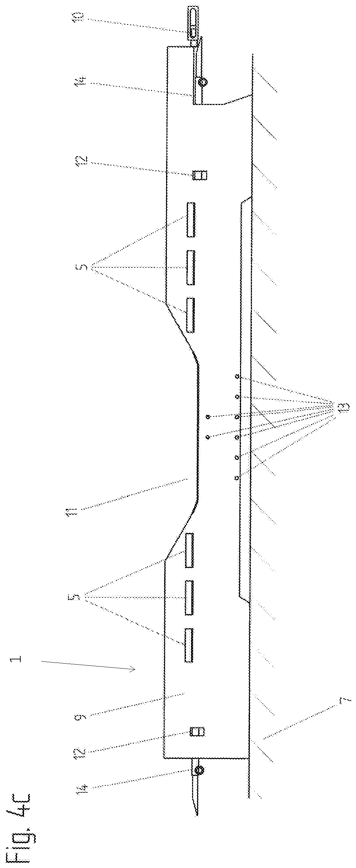

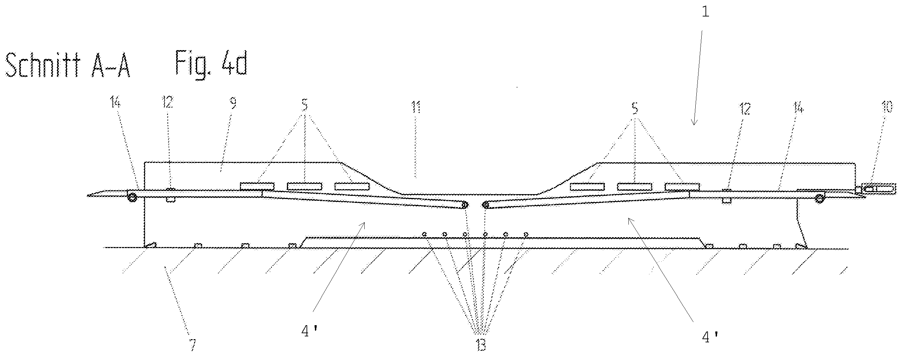

Fig. 4a - 4d zeigt das Ausführungsbeispiel der Fig. 2 in einer andersartigen Konfiguration in der Verladeposition (ohne Ladegut 3). In diesem Beispiel wurden im Vergleich zur Fig. 2 andere bzw. höher an der Tragvorrichtung 1 angeordnete Lager 13 für die Tragflächen verwendet. Damit liegen die Schwenkachsen für die als Tragflächen ausgebildeten schwenkbaren Abstützvorrichtungen 4' entsprechend höher.

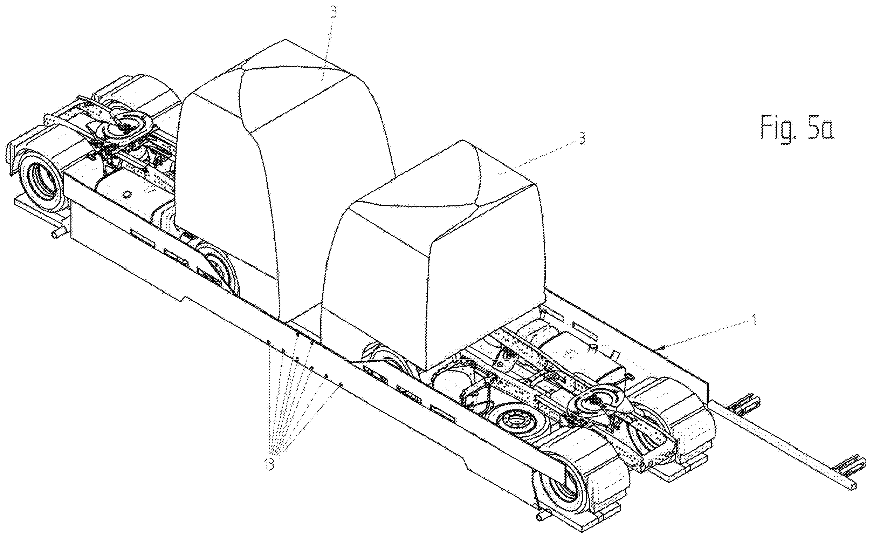

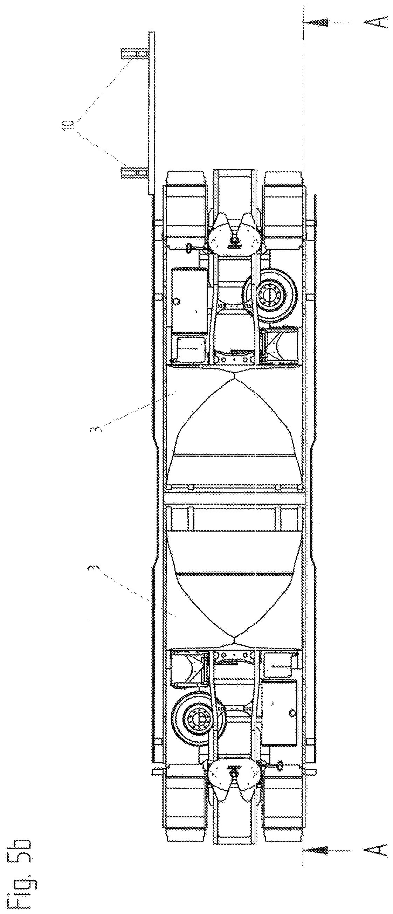

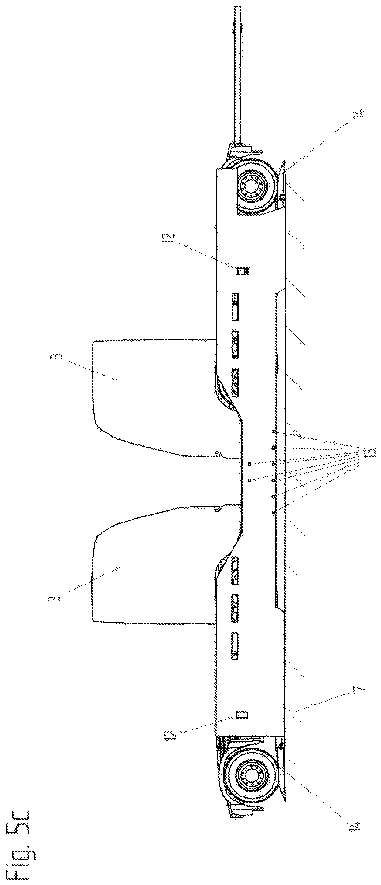

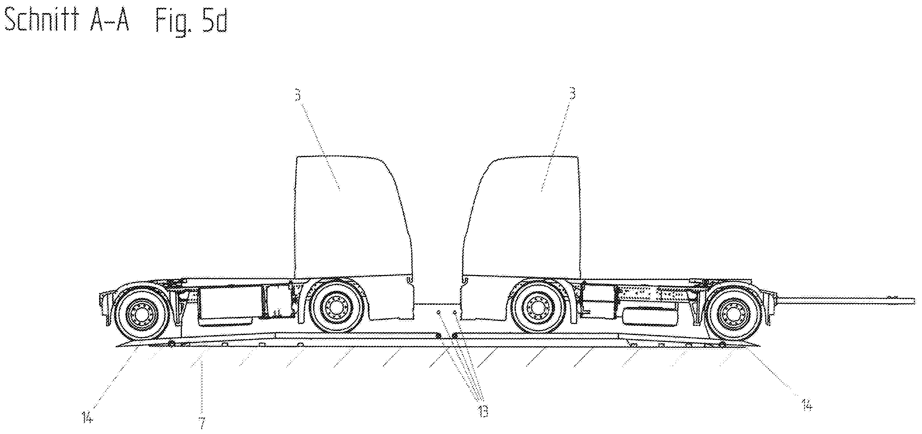

Fig. 5a - 5d zeigt das Ausführungsbeispiel der Figur 2 in verschiedenen Ansichten in der Aufnahmeposition mit Ladegut 3 in Form von zwei Zugmaschinen.

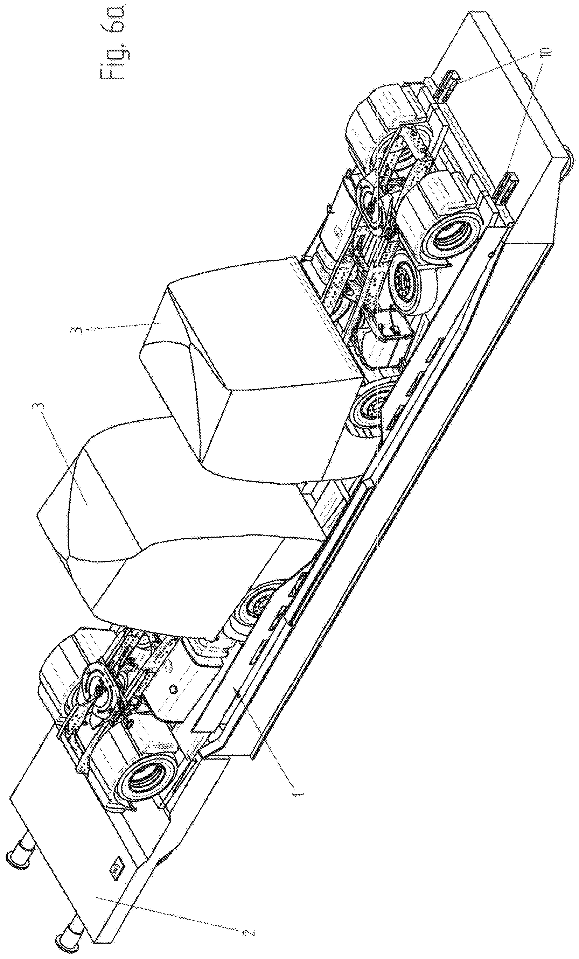

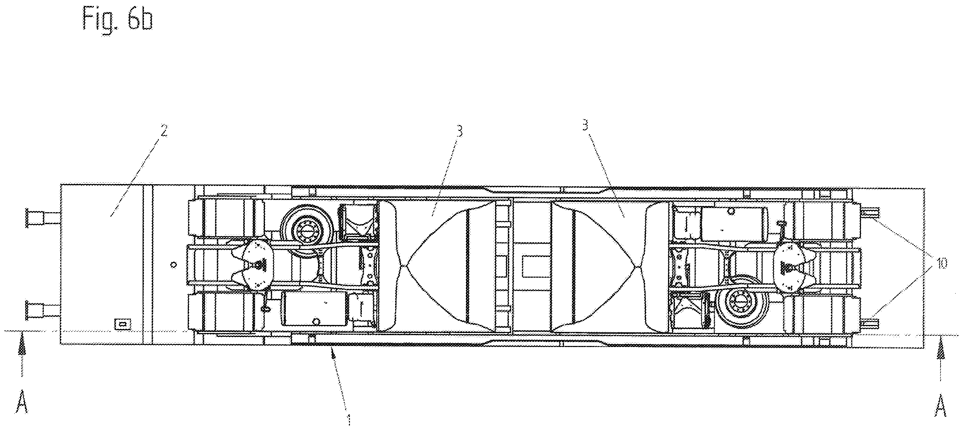

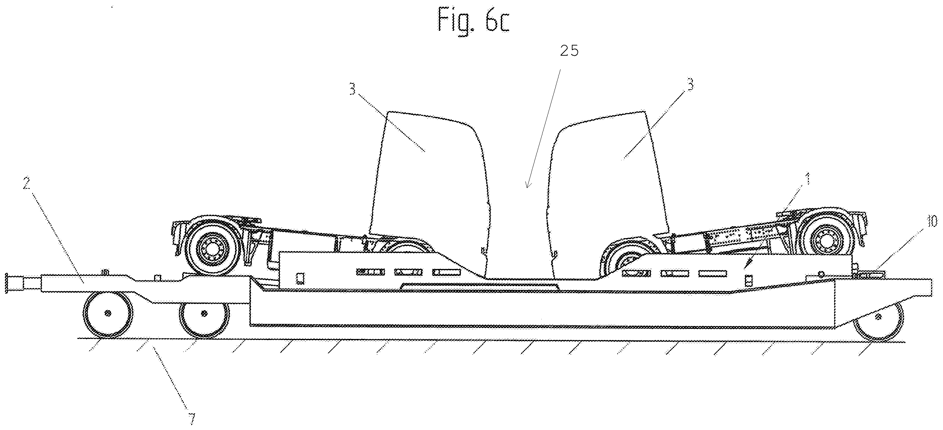

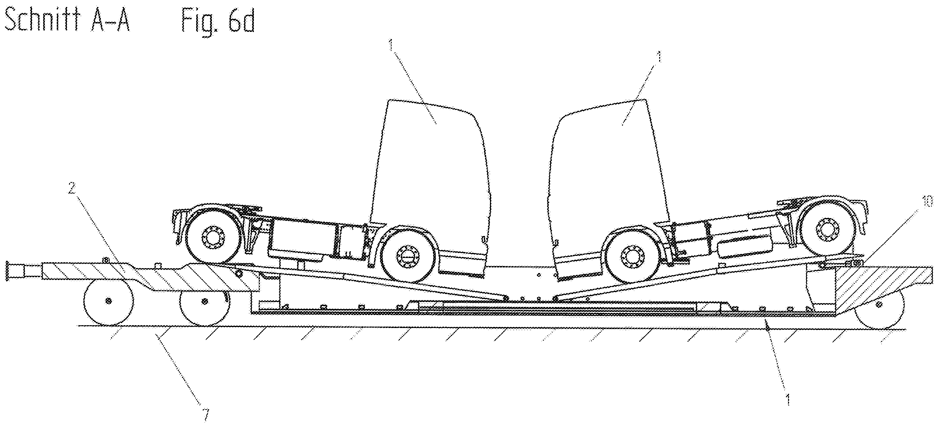

Fig. 6a - 6d zeigt das Ausführungsbeispiel der Figur 2 in verschiedenen Ansichten in der Verladeposition Ladegut 3 in Form von zwei Zugmaschinen. In dieser Darstellung befinden sich die Abstützvorrichtungen 4' in ihrer jeweiligen Verladeposition, in welcher das jeweilige Ladegut zur Horizontalen geneigt ist. Die freien Enden der Abstützvorrichtungen 4' liegen jeweils auf dem als Taschenwagen ausgebildeten Schienenfahrzeug 2 auf. Die Tragvorrichtung 1 weist an einer Stirnseite Fixiermittel 10 zum Fixieren der Tragvorrichtung 1 am Schienenfahrzeug 2 auf. Die Fixiermittel 10 sind als ISO-Containeraufnahmen ausgebildet, in die korrespondierende Zapfen des Schienenfahrzeugs 2 eingreifen.

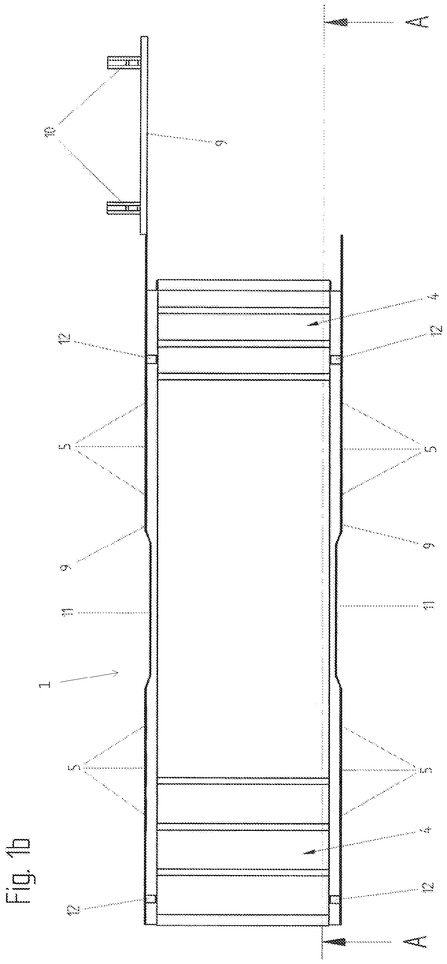

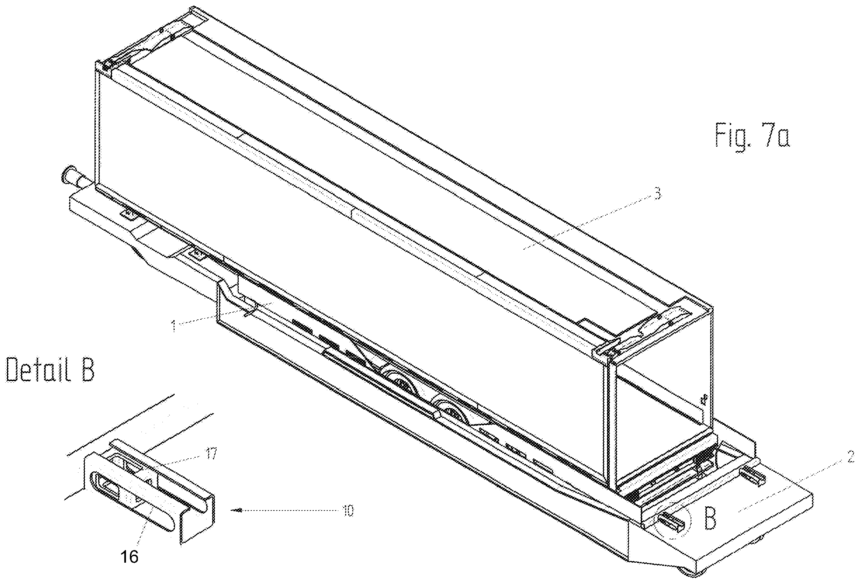

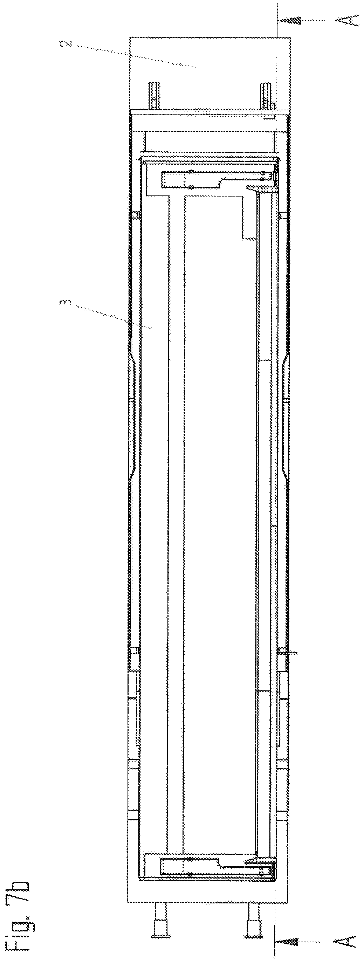

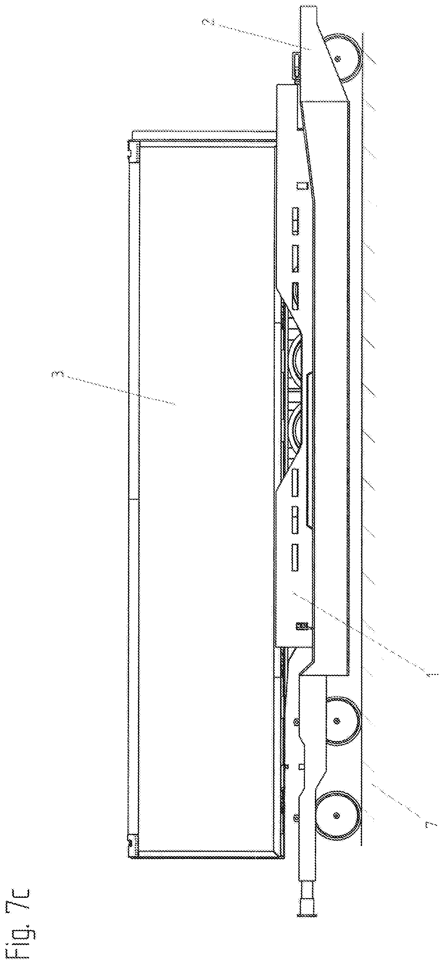

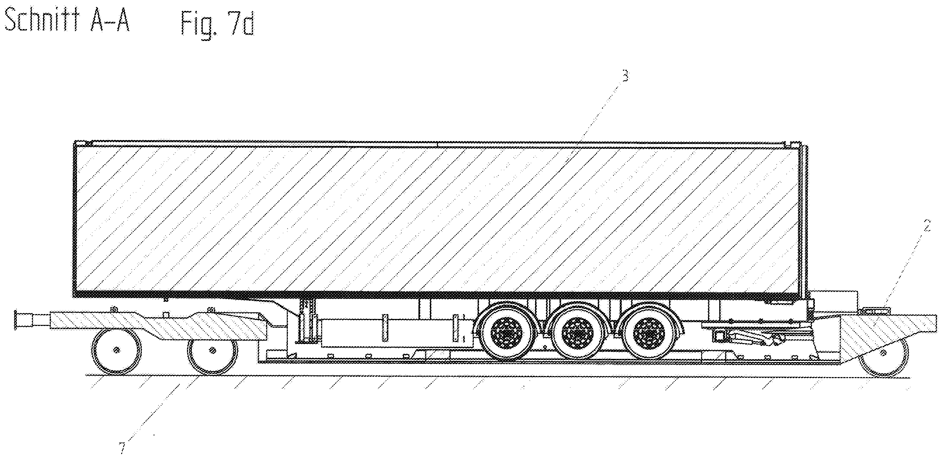

Fig. 7a - 7d zeigt das Ausführungsbeispiel der Figur 1 in verschiedenen Ansichten in der Verladeposition mit Ladegut 3 in Form eines Sattelanhängers. Das Detail B kann bei allen Ausführungsbeispielen vorgesehen sein. Es illustriert eine Möglichkeit der schwimmenden Aufnahme der Tragvorrichtung 1 am Schienenfahrzeug 2. Im dargestellten etwa C-förmigen Führungsteil 16 des Fixiermittels 10 kann ein Aufnahmegleitteil 17 entlang des Führungsteils 16 verfahren werden. Hierdurch kann eine Anpassung an unterschiedliche Längenpositionierungen, die sich durch die Aufnahme im Sattelzapfen des Sattelauflegers ergeben, ausgeglichen werden. Anders als dargestellt kann alternativ zur Verfahrbarkeit eine Verschwenkbarkeit des Fixiermittels 10 mit Abbolzung vorgesehen sein.

Fig. 8a - 8c zeigt eine weitere Darstellung des Ausführungsbeispiels der Figur 2 in einer andersartigen Konfiguration in der Verladeposition mit Ladegut 3 in Form eines Busses. In diesem Beispiel wurden im Vergleich zur Fig. 2 andere bzw. höher an der Tragvorrichtung 1 angeordnete Lager 13 für die Tragflächen verwendet. Damit liegen die Schwenkachsen für die Tragflächen entsprechend höher.

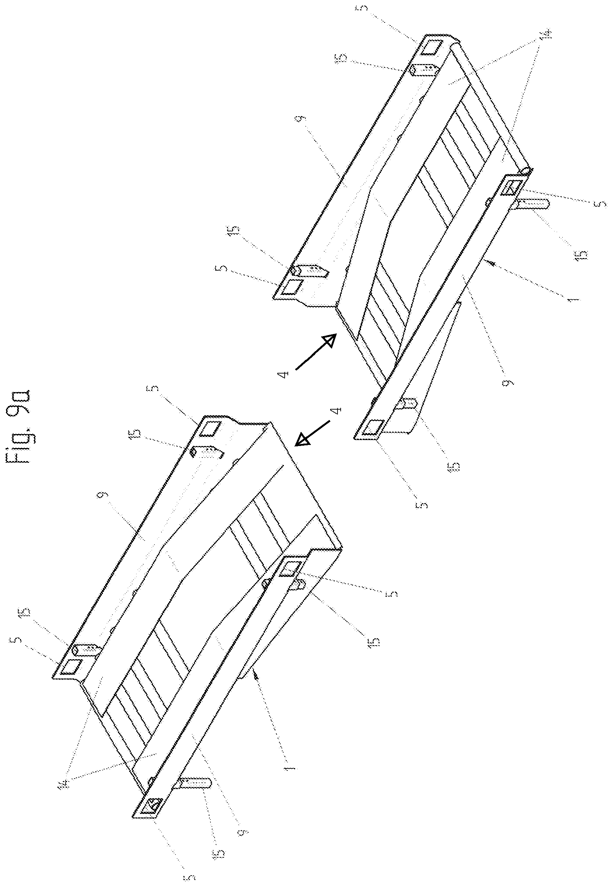

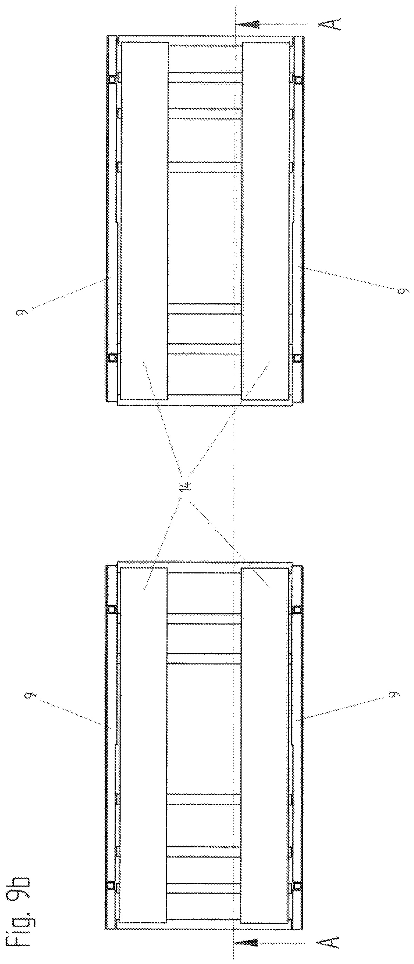

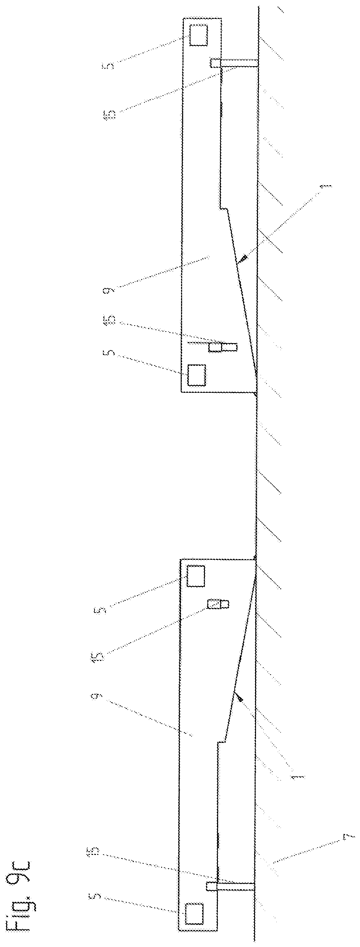

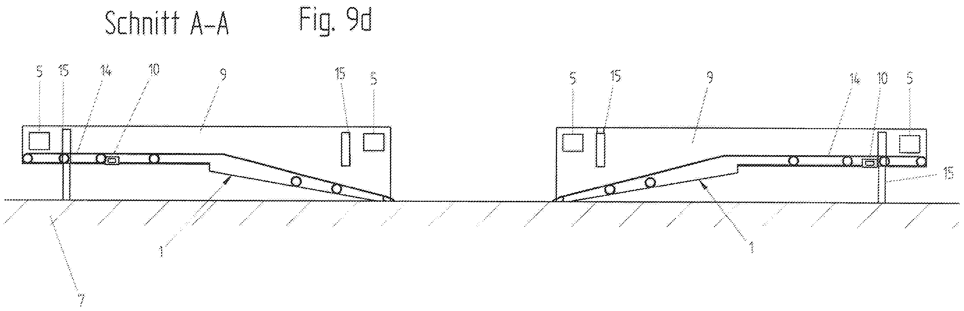

Fig. 9a - 9d zeigt ein drittes Ausführungsbeispiel der Erfindung in verschiedenen Ansichten in der Aufnahmeposition (ohne Ladegut 3). Bei diesem Ausführungsbeispiel ist die Tragvorrichtung 1 bzw. die feststehend damit verbundene Abstützvorrichtung 4 als Ganzes zwischen der Aufnahmeposition und der Verladeposition bewegbar. Über hier einfahrbare Stützen 15 kann die Tragvorrichtung 1 in der Aufnahmeposition abgestützt werden. Nach dem Aufheben der Tragvorrichtung 1 durch ein Hebezeug sind die Stützen 15 einzufahren.

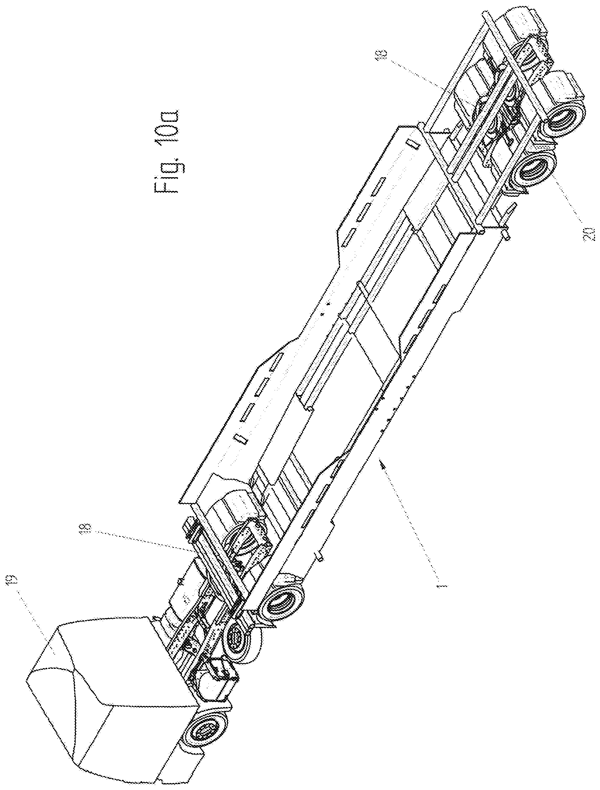

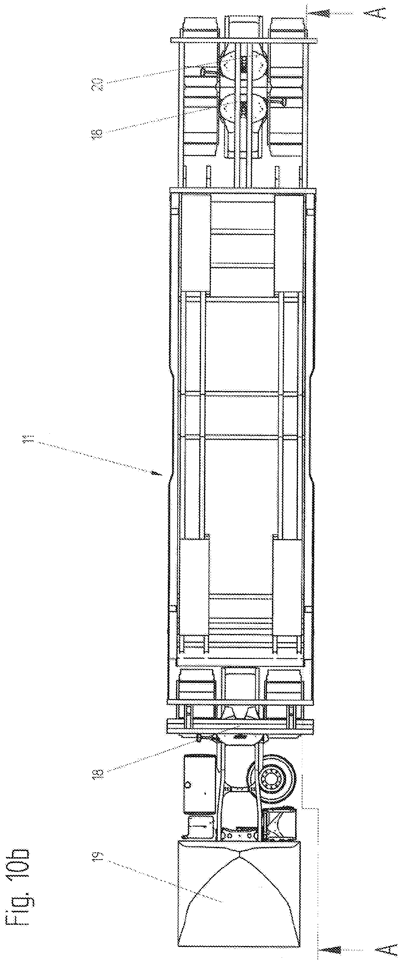

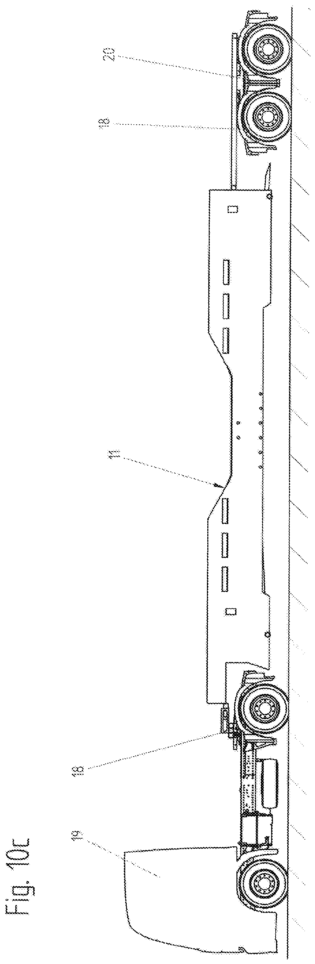

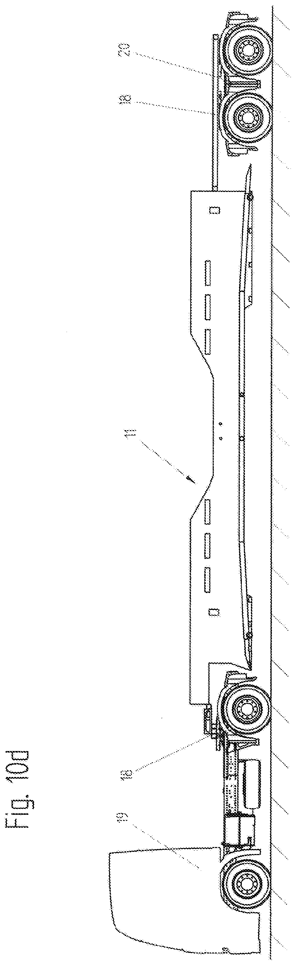

Fig. 10a - 10d zeigt ein weiteres Ausführungsbeispiel der Erfindung, bei welchem die Tragvorrichtung 1 fahrbar ausgebildet ist. Zu diesem Zweck kann die Tragvorrichtung wenigstens eine Koppelstelle 18 für zumindest eine mit Rädern versehene Achse oder Nachlaufeinrichtung 20 und wenigstens eine Koppelstelle für ein Zugfahrzeug 19 aufweisen. Es kann auch vorgesehen sein, dass zwei Koppelstellen für mit Rädern versehene Achsen an beiden Enden der Tragvorrichtung 1 angeordnet sind und eine Anhängevorrichtung für ein Fahrzeug.

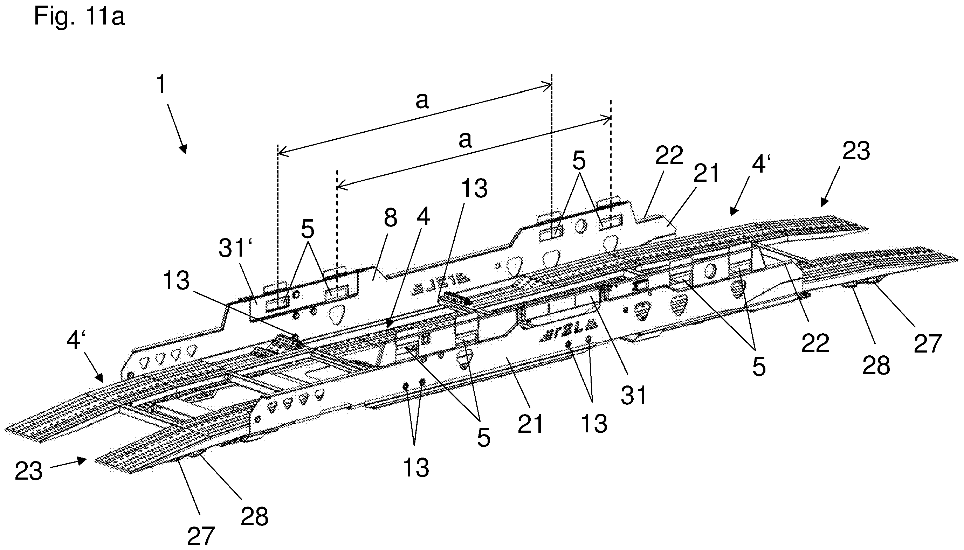

Die nachfolgenden Fig. 11a bis 15b zeigen ein weiteres Ausführungsbeispiel in verschiedenen Ansichten und Detaildarstellungen.

Fig. 11a zeigt ein weiteres Ausführungsbeispiel der Erfindung in einer perspektivischen Ansicht. Die Längsseiten 21 des Tragrahmens 8 sind in diesem Beispiel mit Versteifungselementen 22 ausgestattet, die an der Außenseite der Längsseiten 21 angebracht sind. Eines der Versteifungselemente 22 verläuft entlang der gesamten Länge der Längsseite 21 und weist im zentralen Bereich der Längsseite 21 eine Kröpfung auf. Die andere Längsseite 21 weist drei Abschnitte auf, nämlich zwei Endabschnitte und einen zentralen Abschnitt, wobei das Versteifungselement 22 hierbei nur in den zwei Endabschnitten stegförmig ausgebildet ist. Der zentrale Abschnitt der Längsseite 21 ist als schwenkbare Tür 31 ausgebildet. Bei geöffneter Tür 31 wird das Ein- und Aussteigen aus einem an der Tragvorrichtung 1 abgestellten Fahrzeugs ermöglicht.

Die Tragvorrichtung 1 ist mit insgesamt drei Abstützvorrichtungen 4, 4' ausgestattet. Eine der Abstützvorrichtungen 4 ist relativ zur Tragvorrichtung 1 feststehend und in diesem Ausführungsbeispiel einstückig mit der Tragvorrichtung 1 ausgebildet. Die weiteren zwei Abstützvorrichtungen 4' sind jeweils schwenkbar an Schwenklagerstellen bzw. Lagern 13 im Tragrahmen 8 angeordnet. Für die Verankerung einer Abstützvorrichtung 4' in den Schwenklagerstellen bzw. Lagern 13 können durch Betätigung einer Bedieneinrichtung, beispielsweise durch Verschwenken eines Hebels, Bolzen aus der Abstützvorrichtung 4' ausfahren und in die Schwenklagerstellen eingreifen.

In den Längsseiten 21 des Tragrahmens 8 sind in diesem Beispiel je zwei Paare von Aufnahmetaschen 5 angebracht. Zwei der Aufnahmetaschen 5 sind in einer weiteren Tür 31' angeordnet. Der jeweilige Abstand a der zwei Aufnahmetaschen 5 eines jeweiligen Paares beträgt etwa 4876 mm. Die oberhalb der Versteifungselemente 22 angeordneten Aufnahmetaschen 5 sind für Greifkanten eines sogenannten spreaders ausgebildet, welcher an einem Kran oder einem reach stacker angebracht sein kann.

Die Abstützvorrichtungen 4' weisen in den Endbereichen Auffahrelemente 23 auf, die mit einer Neigung zur Horizontalen versehen sind, um das Auffahren eines Fahrzeugs auf die Abstützvorrichtung 4' zu erleichtern.

Die Abstützvorrichtungen 4' weisen darüber hinauf in dieser Ansicht nicht ersichtliche Rutschsicherungen auf, um das Rutschen der Abstützvorrichtungen 4' an einem Taschenwagen zu begrenzen.

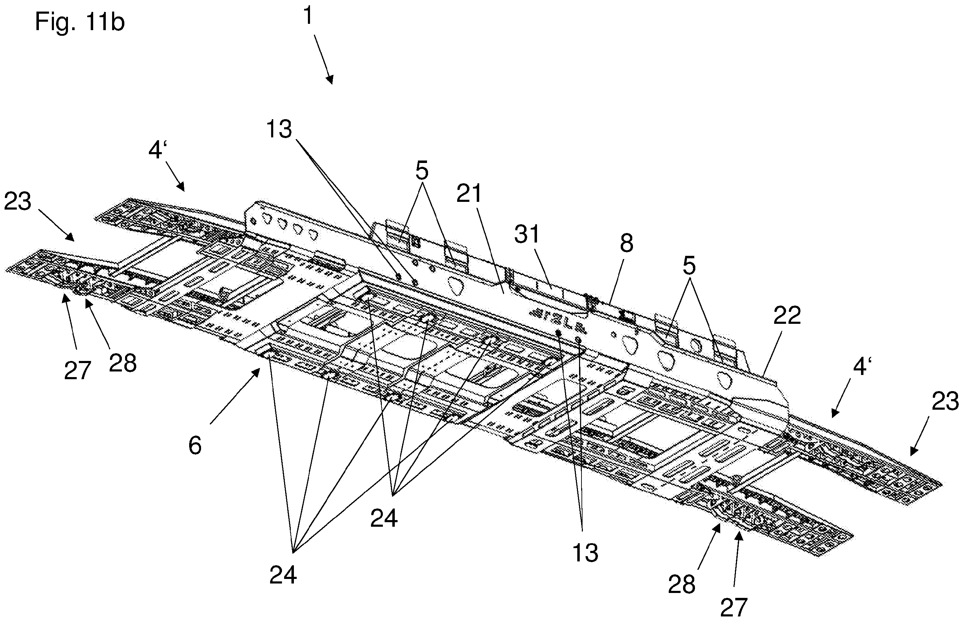

Fig. 11b zeigt das Ausführungsbeispiel der Fig. 11a in einer perspektivischen Unteransicht. In dieser Ansicht ist zu sehen, dass in diesem Beispiel die Aufstandsflächen 6 der Tragvorrichtung 1 mit reibungsvergrößernden Auflagevorrichtungen 24 ausgestattet sind. Dadurch ist auch bei einem glatten Terminalflur 7 sichergestellt, dass die Tragvorrichtung 1 befahren werden kann, ohne sich dabei relativ zum Terminalflur 7 zu verschieben.

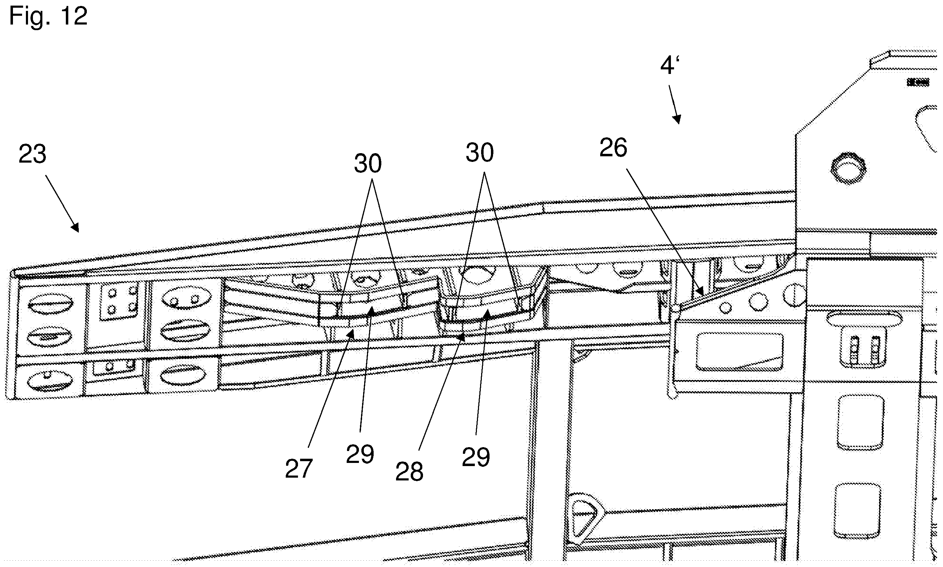

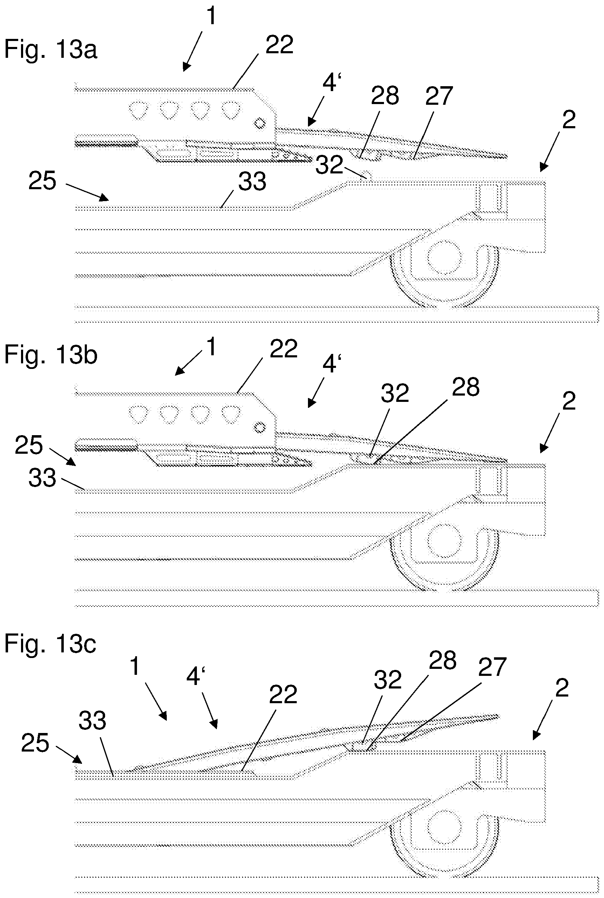

Fig. 12 zeigt ein Detail der Fig. 11 in einer perspektivischen Unteransicht. Zu sehen ist ein Endbereich einer der schwenkbar an der Tragvorrichtung 1 angeordneten Abstützvorrichtungen 4', die in diesem Beispiel mit zwei Auflageflächen 27, 28 versehen ist, um an zwei unterschiedlichen Positionen eine Abstützung der Abstützvorrichtung 4' am Schienenfahrzeug 2 zu ermöglichen. Die Auflageflächen 27, 28 sind abschnittsweise im Wesentlichen konvex ausgebildet, indem mehrere Geradstreckenabschnitte unter entsprechenden Winkeln aneinander anschließend angeordnet sind. Dadurch wird eine flächige Auflage der Auflageflächen 27, 28 auf einer korrespondierenden Fläche eines Schienenfahrzeugs 2, in den die Tragvorrichtung 1 eingesetzt wird, in verschiedenen Schwenkstellungen der Abstützvorrichtung 4' ermöglicht. Die Auflageflächen 27, 28 weisen hierbei Aufnahmeöffnungen 29 auf, in welche ein am Schienenfahrzeug 2 angeordneter Zapfen 32 (siehe Fig. 13a) eingreifen kann. Um Längsbewegungen der Abstützvorrichtung 4' gegenüber dem Schienenfahrzeug 2, beispielsweise beim Rangierkuppeln des Schienenfahrzeugs 2, weitestgehend zu vermeiden, sind Anschläge 30 vorgesehen, an denen sich der Zapfen 32 abstützen kann. Die Seitenwände der Aufnahmeöffnung 29 bilden eine Rutschsicherung quer zur Längserstreckung, die Anschläge 30 bilden eine Rutschsicherung in Richtung der Längserstreckung. Die Aufnahmeöffnung 29 kann als ISO-Containeraufnahme ausgebildet sein.

Die Fig. 13a bis 13c zeigen beispielhaft den Ablauf des Einsetzens einer Tragvorrichtung 1 in eine Tasche 25 eines als Taschenwagen ausgebildeten Schienenfahrzeugs 2 in Seitenansicht.

Fig. 13a zeigt einen Endbereich der Tragvorrichtung 1. Insbesondere ist ein Endbereich einer Abstützvorrichtung 4' zu sehen, die mit einer ersten Auflagefläche 27 und mit einer zweiten Auflagefläche 28 ausgestattet ist. Die beiden Auflageflächen 27, 28 weisen jeweils eine hier nicht sichtbare Aufnahmeöffnung 29 auf. Am Taschenwagen ist ein Zapfen 32 ausgebildet, der in weiterer Folge in die Aufnahmeöffnung 29 eingreift.

In Fig. 13b ist die Tragvorrichtung 1 so weit abgesenkt, dass die zweite Auflagefläche 28 auf einer korrespondierenden Fläche des Taschenwagens aufliegt. Der Zapfen 32 greift durch eine in dieser Ansicht nicht sichtbare Aufnahmeöffnung 29 ein, um das Rutschen der Abstützvorrichtung 4 zu begrenzen.

In Fig. 13c ist die Tragvorrichtung 1 vollständig in die Tasche 25 des Taschenwagens abgesenkt, in welcher sich die Tragvorrichtung 1 mit ihrer Aufstandsfläche 6 in der Tasche 25 des Taschenwagens abstützt. Durch eine im Wesentlichen konvexe Ausbildung der zweiten Auflagefläche 28 liegt diese auch in dieser Schwenkstellung der Abstützvorrichtung 4 auf dem Taschenwagen auf. Das Versteifungselement 22 verläuft oberhalb der Oberkante 33 im Bereich der Tasche 25 des Taschenwagens.

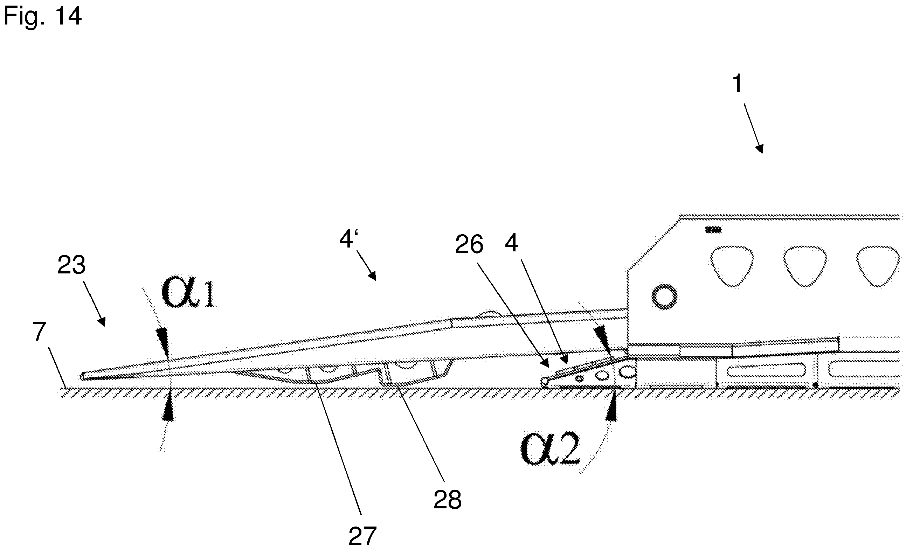

Fig. 14 zeigt die Tragvorrichtung 1 der Fig. 11a, die in dieser Darstellung auf einem Terminalflur 7 abgestellt ist. Zu sehen sind hier die Endbereiche von zwei der insgesamt drei Abstützvorrichtungen 4, 4' der Tragvorrichtung 1. Die schwenkbar an der Tragvorrichtung 1 angebrachte Abstützvorrichtung 4' weist ein erstes Auffahrelement 23 auf. In dem wie dargestellt abgestellten Zustand der Tragvorrichtung 1 auf dem Terminalflur 7 weist die befahrbare Fläche dieses ersten Auffahrelements 23 einen Neigungswinkel α₁ gegenüber dem im Wesentlichen horizontal verlaufenden Terminalflur 7 auf. Der Neigungswinkel α₁ beträgt in diesem Beispiel etwa 7,5 Grad bis 8,3 Grad. Die relativ zur Tragvorrichtung 1 feststehend und einstückig mit der Tragvorrichtung 1 ausgebildete Abstützvorrichtung 4 weist ebenso ein zweites Auffahrelement 26 auf, welches einen Neigungswinkel α₂ gegenüber dem im Wesentlichen horizontal verlaufenden Terminalflur 7 aufweist. Der Neigungswinkel α₂ beträgt in diesem Beispiel etwa 15 Grad.

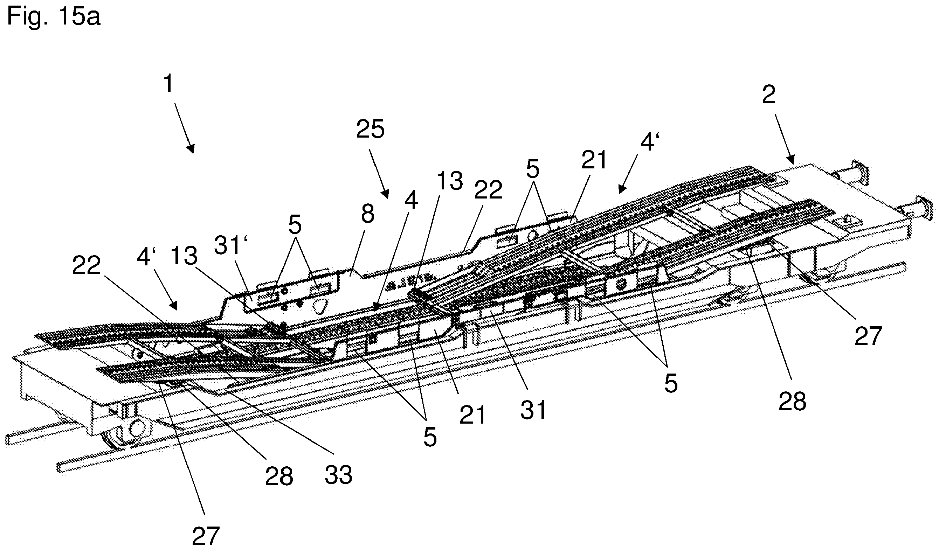

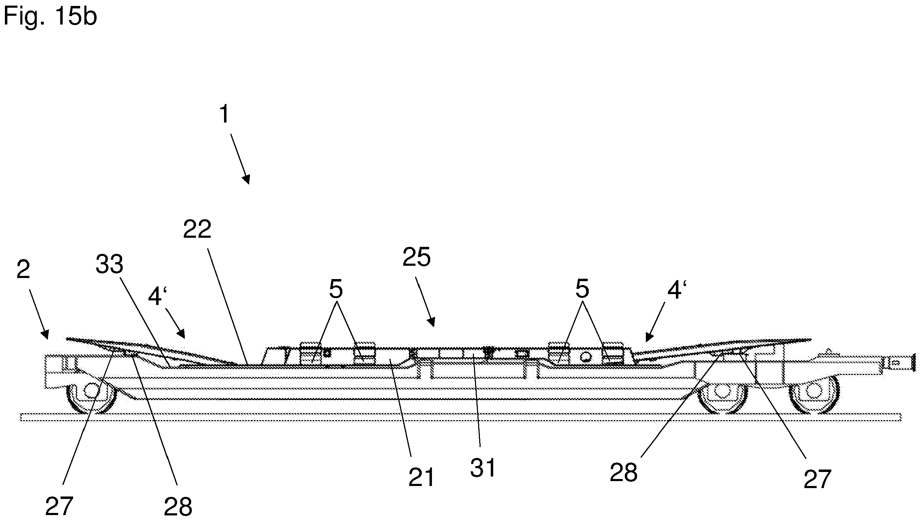

Fig. 15a zeigt in einer perspektivischen Oberansicht ein als Taschenwagen ausgebildetes Schienenfahrzeug 2, in dessen Tasche 25 die Tragvorrichtung 1 gemäß Fig. 11a und 11b eingesetzt ist und Fig. 15b zeigt diese Anordnung in einer Seitenansicht. Die Abstützvorrichtungen 4' befinden sich in ihrer Verladeposition (ohne Ladegut 3).

In Fig. 15b ist ersichtlich, dass die beiden schwenkbar an der Tragvorrichtung 1 angeordneten Abstützvorrichtungen 4' an deren freien Endbereichen jeweils mit im Wesentlichen konvex ausgebildeten ersten Auflageflächen 27 und zweiten Auflageflächen 28 ausgestattet sind. Der Endbereich der in der Darstellung linken Abstützvorrichtung 4' stützt sich am Taschenwagen über deren zweite Auflagefläche 28 ab und der Endbereich der in der Darstellung rechten Abstützvorrichtung 4' stützt sich am Taschenwagen über deren erste Auflagefläche 27 ab.

### Bezugszeichenliste:

- 1: Tragvorrichtung
- 2: Schienenfahrzeug
- 3: Ladegut
- 4, 4': Abstützvorrichtung
- 5: Aufnahmetasche
- 6: Aufstandsfläche der Tragvorrichtung
- 7: Terminalflur
- 8: Tragrahmen
- 9: Seite des Tragrahmens
- 10: Fixiermittel
- 11: Ausnehmung
- 12: Öffnung
- 13: Lager für Abstützvorrichtung
- 14: Planke
- 15: Stütze
- 16: Führungsteil
- 17: Aufnahmegleitteil
- 18: Koppelstelle
- 19: Zugfahrzeug
- 20: Nachlaufeinrichtung
- 21: Längsseite des Tragrahmens
- 22: Versteifungselement
- 23: erstes Auffahrelement
- 24: Auflagevorrichtung
- 25: Tasche eines Taschenwagens
- 26: zweites Auffahrelement
- 27: erste Auflagefläche der Abstützvorrichtung
- 28: zweite Auflagefläche der Abstützvorrichtung
- 29: Aufnahmeöffnung
- 30: Anschlag
- 31, 31': Tür in der Längsseite des Tragrahmens
- 32: Zapfen
- 33: Oberkante der Tasche eines Taschenwagens
- a: Abstand zwischen zwei Aufnahmetaschen
- α₁: Neigungswinkel eines ersten Auffahrelements
- α₂: Neigungswinkel eines zweiten Auffahrelements

## Patentansprüche

1. Hebbare Tragvorrichtung (1) für das Beladen eines Schienenfahrzeuges (2) mit Ladegut (3) durch eine Hubvorrichtung, mit wenigstens einer Abstützvorrichtung (4, 4') für das Ladegut (3), wobei die Tragvorrichtung (1) Aufnahmetaschen (5) für die Hubvorrichtung aufweist, wobei die Tragvorrichtung (1) Aufstandsflächen (6) zum unmittelbaren Aufstellen der Tragvorrichtung (1) auf einem Terminalflur (7) aufweist, **dadurch gekennzeichnet, dass** die wenigstens eine Abstützvorrichtung (4, 4') zwischen einer Aufnahmeposition für das Ladegut (3), bei der das Ladegut (3) im Wesentlichen horizontal ausgerichtet ist und einer Verladeposition für das Ladegut (3), in welcher das Ladegut (3) geneigt ist, bewegbar ist.

2. Tragvorrichtung nach Anspruch 1, wobei die Tragvorrichtung (1) einen Tragrahmen (8) aufweist, wobei die Aufnahmetaschen (5) und die Aufstandsflächen (6) am Tragrahmen (8) angeordnet sind, wobei vorzugsweise die Aufnahmetaschen (5) in einem oberen Endbereich des Tragrahmens (8) angeordnet sind.

3. Tragvorrichtung nach Anspruch 2, wobei der Tragrahmen (8) längserstreckt ausgebildet ist und zwei Längsseiten (21) umfasst, wobei vorzugsweise die Aufnahmetaschen (5) in einem oberen Endbereich der Längsseiten (21) angeordnet sind, besonders bevorzugt in den Bereichen der jeweiligen Längsenden der Längsseiten (21).

4. Tragvorrichtung nach Anspruch 3, wobei ein Ende der wenigstens einen Abstützvorrichtung (4, 4') über die Längserstreckung des Tragrahmens (8) hinausragt.

5. Tragvorrichtung nach wenigstens einem der Ansprüche 1 bis 4, wobei an der wenigstens einen Abstützvorrichtung (4') wenigstens eine Auflagefläche (27, 28) vorgesehen ist, welche vorzugsweise im Wesentlichen konvex ausgebildet ist, um ein Abwälzen der wenigstens einen Abstützvorrichtung (4') am Schienenfahrzeug (2) bei der Absenkung zu gestatten.

6. Tragvorrichtung nach Anspruch 5, wobei die wenigstens eine Auflagefläche (27, 28) eine Aufnahmeöffnung (29), vorzugsweise in Form eines in Längsrichtung verlaufenden Führungsschlitzes, aufweist, in den ein am Schienenfahrzeug (2) angeordneter Zapfen (32) einführbar ist, wobei bevorzugt vorgesehen ist, dass zur Begrenzung einer Bewegung der Tragvorrichtung (1) in Längsrichtung benachbart zur Aufnahmeöffnung (29) wenigstens ein Anschlag (30) vorgesehen ist.

7. Tragvorrichtung nach wenigstens einem der Ansprüche 1 bis 6, wobei die wenigstens eine Abstützvorrichtung (4, 4') in Form einer Tragfläche oder in Form einer Vielzahl von Streben ausgebildet ist.

8. Tragvorrichtung nach wenigstens einem der Ansprüche 1 bis 7, wobei die Tragvorrichtung (1) als Ganzes zwischen der Aufnahmeposition und der Verladeposition bewegbar ist, wobei vorzugsweise die wenigstens eine Abstützvorrichtung (4) relativ zur Tragvorrichtung (1) feststehend angeordnet ist.

9. Tragvorrichtung nach wenigstens einem der Ansprüche 1 bis 8, wobei die wenigstens eine Abstützvorrichtung (4') zur Ausführung der Bewegung zwischen der Aufnahmeposition und der Verladeposition relativ zur Tragvorrichtung (1) bewegbar, vorzugsweise schwenkbar, angeordnet ist.

10. Tragvorrichtung nach Anspruch 9, wobei eine Antriebsvorrichtung zum Bewegen der wenigstens einen Abstützvorrichtung (4') vorgesehen ist.

11. Tragvorrichtung nach Anspruch 9 oder 10, wobei die wenigstens eine Abstützvorrichtung (4') zur Ausführung der Bewegung zwischen der Aufnahmeposition und der Verladeposition relativ zur Tragvorrichtung (1) - ggf. bis auf die Einwirkung einer Dämpfvorrichtung - frei bewegbar ist.

12. Tragvorrichtung nach wenigstens einem der Ansprüche 1 bis 11, wobei die Tragvorrichtung (1) - vorzugsweise formschlüssige - Fixiermittel (10) zum Fixieren der Tragvorrichtung (1) am Schienenfahrzeug (2) aufweist, wobei vorzugsweise die Fixiermittel (10) als ISO-Containeraufnahmen ausgebildet sind.

13. Tragvorrichtung nach Anspruch 2 und 12, wobei die Fixiermittel (10) am Tragrahmen (8), vorzugsweise an einer Stirnseite des Tragrahmens (8), angeordnet sind, wobei vorzugsweise wenigstens zwei voneinander beabstandete Fixiermittel (10) am Tragrahmen (8) angeordnet sind.

14. Tragvorrichtung nach wenigstens einem der vorangehenden Ansprüche, wobei die wenigstens eine Abstützvorrichtung (4, 4') längenveränderbar ausgebildet ist.

15. Tragvorrichtung nach wenigstens einem der Ansprüche 2 bis 14, wobei die wenigstens eine Abstützvorrichtung (4, 4') unterschiedlich relativ zum Tragrahmen (8) positioniert an diesem - ggf. bewegbar - befestigbar ist.

16. Tragvorrichtung nach wenigstens einem der Ansprüche 1 bis 15, wobei die Tragvorrichtung (1) wenigstens zwei Abstützvorrichtungen (4, 4') aufweist, die unabhängig voneinander mit Ladegut (3) beladbar sind.

17. Schienenfahrzeug (2), insbesondere Taschenwagen, mit wenigstens einer Tragvorrichtung (1) nach wenigstens einem der vorangehenden Ansprüche.

18. Taschenwagen mit einer Tasche (25) und wenigstens einer Tragvorrichtung (1) nach wenigstens einem der vorangehenden Ansprüche, wobei die Tragvorrichtung (1) zumindest teilweise innerhalb der Tasche (25) angeordnet ist.

19. Verfahren zum Beladen eines Schienenfahrzeuges (2), insbesondere Taschenwagens, mit Ladegut (3) durch eine Hubvorrichtung unter Verwendung einer hebbaren Tragvorrichtung (1) nach wenigstens einem der Ansprüche 1 bis 16, wobei
- die Tragvorrichtung (1) mit ihren Aufstandsflächen (6) unmittelbar auf einem Terminalflur (7) aufgestellt wird,
- wenigstens eine Abstützvorrichtung (4, 4') der Tragvorrichtung (1) in einer Aufnahmeposition mit Ladegut (3) beladen wird, wobei das Ladegut (3) in der Aufnahmeposition im Wesentlichen horizontal ausgerichtet ist,
- die Tragvorrichtung (1) samt Ladegut (3) von der Hubvorrichtung über Aufnahmetaschen (5) der Tragvorrichtung (1) angehoben wird, wobei vorzugsweise Greifkanten oder Greifer der Hubvorrichtung in die Aufnahmetaschen (5) eingreifen,
- die Tragvorrichtung (1) samt Ladegut (3) von der Hubvorrichtung auf dem Schienenfahrzeug (2) abgesetzt - vorzugsweise von oben in eine Tasche eines als Taschenwagen ausgebildeten Schienenfahrzeuges (2) abgesenkt - wird, wobei die wenigstens eine Abstützvorrichtung (4, 4') in eine Verladeposition für das Ladegut (3), in welcher das Ladegut (3) geneigt ist, bewegt wird.

## Claims

1. A liftable carrying device (1) for loading a rail vehicle (2) with cargo (3) by a hoisting unit, comprising at least one supporting unit (4, 4') for the cargo (3), wherein the carrying device (1) has receiving pockets (5) for the hoisting unit, wherein the carrying device (1) has support surfaces (6) for directly placing the carrying device (1) on a terminal floor (7), **characterised in that** the at least one supporting unit (4, 4') is moveable between a receiving position for the cargo (3), in which the cargo (3) is oriented substantially horizontally, and a loaded position for the cargo (3), in which the cargo (3) is inclined.

2. A carrying device as set forth in claim 1 wherein the carrying device (1) has a carrying frame (8), wherein the receiving pockets (5) and the support surfaces (6) are arranged on the carrying frame (8), wherein preferably the receiving pockets (5) are arranged in an upper end region of the carrying frame (8).

3. A carrying device as set forth in claim 2 wherein the carrying frame (8) is of an elongate configuration and includes two longitudinal sides (21), wherein preferably the receiving pockets (5) are arranged in an upper end region of the longitudinal sides (21), particularly preferred in the regions of the respective longitudinal ends of the longitudinal sides (21).

4. A carrying device as set forth in claim 3 wherein an end of the at least one supporting unit (4, 4') extends beyond the longitudinal extent of the carrying frame (8).

5. A carrying device as set forth in at least one of claims 1 through 4 wherein provided at the at least one supporting unit (4') is at least one contact surface (27, 28) which is preferably of a substantially convex configuration in order to permit a rolling movement of the at least one supporting unit (4') on the rail vehicle (2) in the lowering operation.

6. A carrying device as set forth in claim 5 wherein the at least one contact surface (27, 28) has a receiving opening (29), preferably in the form of a guide slot extending in the longitudinal direction and into which a pin (32) arranged on the rail vehicle (2) can be introduced, wherein it is preferably provided that to limit a movement of the carrying device (1) in the longitudinal direction at least one abutment (30) is provided adjacent to the receiving opening (29).

7. A carrying device as set forth in at least one of claims 1 through 6 wherein the at least one supporting unit (4, 4') is in the form of a carrying surface or in the form of a plurality of struts.

8. A carrying device as set forth in at least one of claims 1 through 7 wherein the carrying device (1) is moveable as a whole between the receiving position and the loaded position, wherein preferably the at least one supporting unit (4) is arranged stationarily relative to the carrying device (1).

9. A carrying device as set forth in at least one of claims 1 through 8 wherein the at least one supporting unit (4') is arranged moveably, preferably pivotably, relative to the carrying device (1), to perform the movement between the receiving position and the loaded position.

10. A carrying device as set forth in claim 9 wherein there is provided a drive device for moving the at least one supporting unit (4').

11. A carrying device as set forth in claim 9 or 10 wherein the at least one supporting unit (4') is freely moveable relative to the carrying device (1) - optionally except for the action of a damping device - for performing the movement between the receiving position and the loaded position.

12. A carrying device as set forth in at least one of claims 1 through 11 wherein the carrying device (1) has - preferably positively locking - fixing means (10) for fixing the carrying device (1) on the rail vehicle (2), wherein preferably the fixing means (10) are in the form of ISO container mountings.

13. A carrying device as set forth in claim 2 and 12 wherein the fixing means (10) are arranged on the carrying frame (8), preferably at an end of the carrying frame (8), wherein preferably at least two mutually spaced fixing means (10) are arranged on the carrying frame (8).

14. A carrying device as set forth in at least one of the preceding claims wherein the at least one supporting unit (4, 4') is adapted to be variable in length.

15. A carrying device as set forth in at least one of claims 2 through 14 wherein the at least one supporting unit (4, 4') can be fixed - optionally moveably - to the carrying frame (8) positioned in differing relationship relative to the carrying frame (8).

16. A carrying device as set forth in at least one of claims 1 through 15 wherein the carrying device (1) has at least two supporting units (4, 4') which are loadable independently of each other with cargo (3).

17. A rail vehicle (2), in particular a pocket wagon, having at least one carrying device (1) as set forth in at least one of the preceding claims.

18. A pocket wagon having a pocket (25) and at least one carrying device (1) as set forth in at least one of the preceding claims, wherein the carrying device (1) is arranged at least partially within the pocket (25).

19. A method for loading a rail vehicle (2), in particular a pocket wagon, with cargo (3) by a hoisting unit, employing a liftable carrying device (1) as set forth in at least one of claims 1 through 16, wherein
- the carrying device (1) is directly placed on a terminal floor (7) with its support surfaces (6),
- at least one supporting unit (4, 4') of the carrying device (1) is loaded with cargo (3) in a receiving position, wherein in the receiving position the cargo (3) is oriented substantially horizontally,
- the carrying device (1) is lifted together with the cargo (3) by the hoisting unit by way of receiving pockets (5), wherein preferably gripper edges or grabs of the hoisting unit engage into the receiving pockets (5),
- the carrying device (1) is set down together with the cargo (3) on the rail vehicle (2) by the hoisting unit, preferably from above into a pocket of a rail vehicle (2) provided in the form of a pocket wagon, wherein the at least one supporting unit (4, 4') is moved into a loaded position for the cargo (3), in which the cargo (3) is inclined.

## Revendications

1. Dispositif porteur soulevable (1) pour le chargement d'un véhicule ferroviaire (2) avec des charges (3) par un dispositif élévateur, avec au moins un dispositif d'appui (4, 4') pour les charges (3), dans lequel le dispositif porteur (1) présente des poches de réception (5) pour le dispositif élévateur, dans lequel le dispositif porteur (1) présente des surfaces de contact (6) pour la mise en place directe du dispositif porteur (1) sur un dégagement terminal (7), **caractérisé en ce que** le au moins un dispositif d'appui (4, 4') peut être déplacé entre une position de réception des charges (3), dans laquelle les charges (3) sont orientées essentiellement à l'horizontale, et une position de chargement des charges (3), dans laquelle les charges (3) sont inclinées.

2. Dispositif porteur selon la revendication 1, dans lequel le dispositif porteur (1) présente un cadre porteur (8), dans lequel les poches de réception (5) et les surfaces de contact (6) sont disposées sur le cadre porteur (8), dans lequel les poches de réception (5) sont disposées, de préférence, dans une zone terminale supérieure du cadre porteur (8).

3. Dispositif porteur selon la revendication 2, dans lequel le cadre porteur (8) est conçu allongé et comprend deux côtés longitudinaux (21), dans lequel, de préférence, les poches de réception (5) sont disposées dans une zone d'extrémité supérieure des côtés longitudinaux (21), de façon particulièrement préférée dans les zones des extrémités longitudinales respectives des côtés longitudinaux (21).

4. Dispositif porteur selon la revendication 3, dans lequel une extrémité du au moins un dispositif d'appui (4, 4') dépasse au-dessus de l'extension longitudinale du cadre porteur (8).

5. Dispositif porteur selon au moins l'une des revendications 1 à 4, dans lequel sur le au moins un dispositif d'appui (4') est prévue au moins une surface d'appui (27, 28), laquelle est conçue, de préférence, essentiellement convexe pour permettre une décharge du au moins un dispositif d'appui (4') sur le véhicule ferroviaire (2) lors de l'abaissement.

6. Dispositif porteur selon la revendication 5, dans lequel la au moins une surface d'appui (27, 28) présente une ouverture de réception (29), de préférence sous forme d'une fente de guidage passant dans le sens longitudinal, dans laquelle peut être introduit un tourillon (32) disposé sur le véhicule ferroviaire (2), dans lequel il est prévu, de préférence, que pour limiter un mouvement du dispositif porteur (1) dans le sens longitudinal est prévue au moins une butée (30) de façon contiguë à l'ouverture de réception (29).

7. Dispositif porteur selon au moins l'une des revendications 1 à 6, dans lequel le au moins un dispositif d'appui (4, 4') est conçu sous forme d'une surface porteuse ou sous forme d'une pluralité d'entretoises.

8. Dispositif porteur selon au moins l'une des revendications 1 à 7, dans lequel le dispositif porteur (1) tout entier peut être déplacé entre la position de réception et la position de chargement, dans lequel, de préférence, le au moins un dispositif d'appui (4) est disposé de façon fixe par rapport au dispositif porteur (1).

9. Dispositif porteur selon au moins l'une des revendications 1 à 8, dans lequel le au moins un dispositif d'appui (4') pour réaliser le mouvement entre la position de réception et la position de chargement est disposé de façon à pouvoir être déplacé, de préférence de façon pivotante, par rapport au dispositif porteur (1).

10. Dispositif porteur selon la revendication 9, dans lequel un dispositif d'entraînement est prévu pour déplacer le au moins un dispositif d'appui (4').

11. Dispositif porteur selon la revendication 9 ou 10, dans lequel le au moins un dispositif d'appui (4') pour réaliser le mouvement entre la position de réception et la position de chargement par rapport au dispositif porteur (1) - le cas échéant jusqu'à l'effet d'un dispositif amortisseur - peut être déplacé librement.

12. Dispositif porteur selon au moins l'une des revendications 1 à 11, dans lequel le dispositif porteur (1) présente des moyens fixateurs (10) - de préférence par engagement positif - pour fixer le dispositif porteur (1) sur le véhicule ferroviaire (2), dans lequel, de préférence, les moyens fixateurs (10) sont conçus comme des porte-conteneurs ISO.

13. Dispositif porteur selon les revendications 2 et 12, dans lequel les moyens fixateurs (10) sont disposés sur le cadre porteur (8), de préférence, sur un côté frontal du cadre porteur (8), dans lequel, de préférence, au moins deux moyens fixateurs (10) distants l'un de l'autre sont disposés sur le cadre porteur (8).

14. Dispositif porteur selon au moins l'une des revendications précédentes, dans lequel le au moins un dispositif d'appui (4, 4') est conçu à longueur variable.

15. Dispositif porteur selon au moins l'une des revendications 2 à 14, dans lequel le au moins un dispositif d'appui (4, 4') peut être fixé différemment par rapport au cadre porteur (8) en étant positionné sur celui-ci - le cas échéant, en pouvant être déplacé -.

16. Dispositif porteur selon au moins l'une des revendications 1 à 15, dans lequel le dispositif porteur (1) présente au moins deux dispositifs d'appui (4, 4'), qui peuvent être chargés de charges (3) indépendamment l'un de l'autre.

17. Véhicule ferroviaire (2), plus particulièrement wagon poche, avec au moins un dispositif porteur (1) selon au moins l'une des revendications précédentes.

18. Wagon poche avec une poche (25) et au moins un dispositif porteur (1) selon au moins l'une des revendications précédentes, dans lequel le dispositif porteur (1) est disposé au moins partiellement à l'intérieur de la poche (25).

19. Procédé de chargement d'un véhicule ferroviaire (2), plus particulièrement d'un wagon poche, avec des charges (3) par un dispositif élévateur en utilisant un dispositif porteur soulevable (1) selon au moins l'une des revendications 1 à 16, dans lequel
- le dispositif porteur (1) est mis en place avec ses surfaces de contact (6) directement sur un dégagement terminal (7),
- au moins un dispositif d'appui (4, 4') du dispositif porteur (1) est chargé de charges (3) dans une position de réception, dans lequel les charges (3) sont orientées essentiellement à l'horizontale dans la position de réception,
- le dispositif porteur (1) avec les charges (3) est soulevé du dispositif élévateur par l'intermédiaire des poches de réception (5) du dispositif porteur (1), des bords de préhension ou pinces du dispositif élévateur engrenant, de préférence, dans les poches de réception (5),
- le dispositif porteur (1) avec le charges est déposé du dispositif élévateur sur le véhicule ferroviaire (2) - de préférence abaissé depuis le haut dans une poche d'un véhicule ferroviaire (2) conçu comme un wagon poche -, dans lequel le au moins un dispositif d'appui (4, 4') est déplacé dans une position de chargement des charges (3), dans laquelle les charges (3) sont inclinées.
